# EUROPEAN PATENT APPLICATION

(11) **EP 4 755 549 A2**
(43) Date of publication of application: **10.06.2026**
(21) Application number: 26171642.7
(22) Date of filing: 19.04.2021
(51) Int. Cl.: B22F 10/00

(54) **MODULAR DEFLECTION UNITS IN MIRROR SYMMETRICAL ARRANGEMENT**

(30) Priority: 30.04.2020 EP 20172491
(62) Divisional of application: 21719627.8
(71) Applicant: Raylase GmbH, 82234 Wessling (DE)
(72) Inventor: WISCHNEWSKI, Reinold, 86919 Utting (DE); SCHÖN, Philipp, 82266 Buch a. Ammersee (DE)
(74) Representative: Araujo Edo, Mario

(57) **Abstract**

The invention refers to a deflection module comprising a first deflection unit (10a) comprising a first scanning device (12a) for scanning a first working beam (50a) over a first working field and (4oa) and a second deflection unit (10b) comprising a second scanning device (12b) for scanning a second working beam (50b) over a second working field (40b). At least a movable mirror (12a-2) of the first scanning device (12a) and at least a movable mirror (12b-2) of the second scanning device (12b) are arranged mirror-symmetrically with respect to each other. The first working field (40a) and the second working field (4ob) overlap in a common overlap area (42).

## Description

### FIELD OF THE INVENTION

The present invention relates in general to laser processing technologies, such as additive manufacturing. In particular, the invention refers to an optical deflection module and to an optical modular deflection system with deflection units which are designed in pairs having a mirror symmetry for improved coordinated operation and enhanced compactness.

### BACKGROUND OF THE INVENTION

Additive manufacturing processes, in which a material is added layer by layer and thermally processed to produce a component, are becoming more and more important in industrial production as compared to classical subtractive manufacturing processes such as milling, drilling and turning, in which a component is produced by subtracting material from an initial material bulk. The layer-by-layer production method that is characteristic of additive manufacturing processes enables the production of highly complex geometric structures with a high degree of design flexibility that subtractive processes cannot achieve.

The increase in the industrial importance of additive manufacturing processes is driven by the increasing efficiency of the light sources used for thermally processing the starting materials. Accordingly, the market is currently experiencing a transition from the use of additive manufacturing processes for the production of prototypes ("rapid prototyping") to a mass industrial use of this technology for series production ("rapid manufacturing"). This development can be observed in numerous sectors of technology, such as the aerospace industry, the automotive industry, medical technology and prosthetics.

A special type of additive manufacturing is based on powder-bed-based processes in which a powder starting material is sequentially applied in layers to the component to be manufactured and melted and processed by a working light beam, typically a laser beam. The powder layers typically have thicknesses in the micrometre range. Scanning units are used for directing the laser light in a controlled manner for melting the powder starting material at a series of target positions according to a predefined process so as to form the desired workpiece.

Scanning units typically comprise galvanometers, i.e. mirrors movable around an axis, for scanning the laser light in different directions by reflecting it at corresponding reflection angles. By combining two mirrors movable around two perpendicular axes, the laser light can be scanned throughout a two-dimensional work field. The movement of the galvanometer mirror or mirrors of such scanning units about the respective axes is respectively driven by a precision galvanometer motor. The mirrors are typically attached to a permanent magnet that is configured to inductively interact with a coil wound within the corresponding galvanometer motor when an electric current flows through the coil. In many applications, the galvanometer motors are considerably larger in size than the mirrors, for which the galvanometer motors pose increased space requirements and design issues.

The possibility of simultaneously forming or laser-processing a component by several laser devices plays a major role for increasing the efficiency of systems for powder-bed-based additive production of components in technologies such as direct powder fusion, vat photopolymerisation or directed energy deposition. Such parallelisation allows achieving higher output rates. However, the benefits of the combined use of several laser devices for simultaneously processing a component (parallelisation) must be balanced against the aforesaid space requirements and design issues related to the use of a plurality of scanning mirrors brings about.

Therefore, there is a need for improvement in the field of additive production of components with regard to deflection devices for parallel processing of a component by several laser devices.

US 2019/0283332 A1 describes an additive manufacturing apparatus comprising a plurality of optical modules configured for directing lasers generated by a plurality of laser modules for melting powder. Each of the optical modules comprises a pair of tiltable mirrors. In each optical module, one of the mirrors is tiltable to steer a laser beam in an X-direction and the other tiltable mirror is tiltable to steer the laser beam in a Y-direction perpendicular to the X-direction.

Two deflection units that are arranged next to each other such that their working areas are overlaid on a common working area, which can be processed jointly and simultaneously by both deflection units are known from US 2019/310463 A1.

US 2017/173883 A1 describes using lower powered laser beam to melt a powder-based build material in synchronisation with a higher powered laser beam used to pre-heat the powder-based build material.

### SUMMARY OF THE INVENTION

The present invention addresses the aforementioned technical disadvantages and provides a solution based on a deflection module according to claim 1, a modular deflection system according to claim 12 and a method of laser processing one or more workpieces according to claim 14. Preferred embodiments of the invention are defined in the appended dependent claims.

A deflection module according to the present invention comprises a first deflection unit and a second deflection unit. Each deflection unit comprises a scanning device configured for scanning a respective working beam over a corresponding working field: the first deflection unit comprises a first scanning device configured for scanning a first working beam over a first working field and the second deflection unit comprises a second scanning device configured for scanning a second working beam over a second working field. The working beam may be a light beam for processing one or more workpieces, in particular a laser beam for laser processing one or more workpieces, for example in an additive manufacturing process or in other laser processes such as welding or laser-marking.

Each of the scanning devices may be a galvanometer scanning device. In preferred embodiments, the first scanning device may comprise a first movable mirror for scanning the first working beam in a first direction by tilting around a first axis and a second movable mirror for scanning the first working beam in a second direction by tilting around a second axis. The first axis may be perpendicular to the second axis. The second scanning device may comprise a first movable mirror for scanning the second working beam in the first direction by tilting around a third axis and a second movable mirror for scanning the second working beam in the second direction by tilting around a fourth axis. The third axis may be perpendicular to the fourth axis and/or parallel to the first axis.

In other embodiments, one or both of the first and second scanning devices may comprise a movable mirror for scanning the corresponding working beam in the first direction and in the second direction by tilting around two different corresponding axes, preferably two mutually perpendicular axes. Embodiments in which one of the scanning devices comprises a first movable mirror and a second movable mirror, each movable around one corresponding axis as previously described, and the other one of the scanning devices comprises a single movable mirror movable around two axes are also foreseen according to the invention. Although the invention will be described here mainly with reference to embodiments in which each of the scanning devices comprises a first movable mirror and a second movable mirror, the principles of the invention equally apply to embodiments in which at least one of the first and second scanning devices comprises a movable mirror for scanning the corresponding working beams in two directions by tilting about respective axes. In particular, all properties regarding the mutual arrangement and distance of the second movable mirrors of different deflection units may equally apply to the mutual arrangement and distance of the movable mirrors (each movable about one or two axes) of different deflection units in corresponding embodiments.

In any case, each of the first and second deflection units is configured for scanning the respective working beam in two independent and different directions, the first direction and the second direction. This allows scanning the first and second working beams over respective two-dimensional working fields, the first working field and the second working field. The first direction may be perpendicular to the second direction. For example, the first direction may correspond to an x-direction and the second direction may correspond to a y-direction in a Cartesian coordinate system. However, the skilled person will understand that the coordinate choice is arbitrary, so that the first direction may correspond to a y-direction and the second direction may correspond to an x-direction.

The first deflection unit and the second deflection unit may have a similar or identical structure and may have similar or identical optical components. Each of the first and second deflection units may further comprise a light source, in particular a laser source, for generating the corresponding working beam. Thus, the first and second working beams might be independently generated. In some embodiments, however, one (the same) light source may be connected to the first deflection unit and to the second deflection unit to provide both the first working beam and the second working beam.

According to some embodiments, in particular if one or both of the first and second scanning devices comprises first and second movable mirrors, the second movable mirror of the first scanning device may be arranged after the first movable mirror of the first scanning device along the beam path of the first working beam towards the first working field. In other words, when propagating towards the first working field, the first working beam may first be reflected by the first movable mirror of the first scanning device and then be reflected by the second movable mirror of the first scanning device, such that the second movable mirror of the first scanning device constitutes the last point of the optical system at which the direction in which the first working beam propagates is transmitted and/or may be changed before the first working beam reaches the first working field. The second movable mirror of the first scanning device may hence form an optical output window of the first deflection unit.

Likewise, the second movable mirror of the second scanning device may be arranged along the beam path of the second working beam towards the second working field after the first movable mirror of the second scanning device. Thus, when propagating towards the second working field, the second working beam may first be reflected by the first movable mirror of the second scanning device and then be reflected by the second movable mirror of the second scanning device, such that the second movable mirror of the second scanning device constitutes the last point of the optical system at which the direction in which the second working beam propagates is transmitted and/or may be changed before the second working beam reaches the second working field. The second movable mirror of the second scanning device may hence form an optical output window of the second deflection unit.

The first working field, which can be scanned by the first working beam deflected by the first deflection unit, and the second working field, which can be scanned by the second working beam deflected by the second deflection unit, have a common overlap area, i.e. a region that is comprised both in the first working field and in the second working field. The common overlap area is an area reachable by the first working beam and by the second working beam. Any point in space within the common overlap area may hence be laser-processed by the first working beam and by the second working beam. The first deflection unit and the second deflection unit may operate in cooperation with each other to form and laser process one or more workpieces in the common overlap area with high efficiency. The first working field and the second working field may lie on the same plane, at a given distance from the last movable mirror along the path of the corresponding working beam, e.g. from the second movable mirror of the first scanning device and/ or from the second movable mirror of the second scanning device. This distance is referred to as "scan radius". The scan radius may correspond to a distance between the second movable mirror of the first scanning device and/ or of the second scanning device and the corresponding working field along the vertical z-direction, i.e. a distance between the second and/or fourth axis and the respective working field in the vertical direction (z-direction).

In the deflection module according to the invention, the second movable mirror of the first scanning device and the second movable mirror of the second scanning device (or the movable mirror of the first scanning device - movable around two axes - and the movable mirror of the first scanning device - movable around two axes) may be arranged mirror-symmetrically with respect to each other and with respect to a common plane of mirror symmetry. Further, the second axis, around which the second movable mirror of the first scanning device is rotatable for scanning the first working beam in the second direction, and the fourth axis, around which the second movable mirror of the second scanning device is rotatable for scanning the second working beam in the second direction (or the respective axes of movable mirrors movable around two axes), may be aligned with each other, i.e. may lie on the same line. As a consequence, the first working field and the second working field may be aligned with each other, in particular in the second direction and/or in a direction perpendicular to the common plane of mirror symmetry. The second and fourth axes (or the respective axes of movable mirrors movable around two axes) may in particular be perpendicular to the common plane of mirror symmetry and mutually aligned, meaning that the second movable mirror of the first scanning device and the second movable mirror of the second scanning device may be movable around the same rotation axis arranged perpendicular to the common plane of mirror symmetry.

The symmetric and aligned arrangement of at least the second movable mirrors of the first and second scanning devices as well as of the second and fourth axes according to the invention allows for a very compact arrangement of the deflection module, in particular with respect to the integration of the first deflection unit and the second deflection unit within a single deflection module for a cooperative use of the first and second working beams for simultaneous laser-processing. Thanks to the mirror-symmetric arrangement of the invention, the distance separating the second movable mirror of the first scanning device from the second movable mirror of the second scanning device, in particular the distance separating an optical centre of the second movable mirror of the first scanning device from an optical centre of the second movable mirror of the second scanning device, can be reduced to a minimum while avoiding any overlapping or obstruction of one of the optical components by other optical components, for example avoiding the possibility of collisions between the second movable mirror of the first scanning device and the second movable mirror of the second scanning device during the operation thereof.

"Optical centre" refers herein to the centre of the beam path defined by the respective deflection unit for the corresponding working beam when the working beam is directed down vertically in the z-direction and/or to the geometrical centre of the corresponding working field. The movable mirrors are arranged such that, when a working beam is reflected at a corresponding movable mirror and deflected towards the centre of the corresponding working field, said working beam is reflected at the optical centre thereof and around said optical centre, depending on a cross-sectional intensity distribution and/or on the spot size of the working beam. For example, when a working beam having a Gaussian intensity distribution in its cross-section is reflected at a movable mirror and deflected towards the centre of the corresponding working field, the centre (the maximum) of said intensity distribution is reflected precisely at the "optical centre" of said movable mirror. The distance between the second movable mirror of the first scanning device, in particular the optical centre thereof, and the second movable mirror of the second scanning device, in particular the optical centre thereof, may thereby be as small as mounting and/or manipulation requirements allow. The same may apply to the physical separation between the edges of the second movable mirror of the first scanning device and the second movable mirror of the second scanning device.

The reduced distance between the second movable mirrors of the first and second scanning devices further allows maximising the size of the common overlap area in which the first deflection unit and the second deflection unit can operate cooperatively at the same time without having to increase the scan radius, which would otherwise lead to increased inaccuracy, in particular at the edges of the workings fields, where the movable mirrors work with largest tilt angles, The reduced scan radius may allow integrating the deflection module of the invention in a laser processing system with a reduced overall vertical dimension. The deflection module of the invention hence provides a solution for parallelised laser-processing which is compact and easy to transport and ship, which is advantageous in terms of providing a rapid and satisfactory customer service. The deflection module according to the invention thus provides an improved balance between compactness and high yield/productivity achieved through the simultaneous action of a plurality of working beams.

The first and second scanning devices may be rigidly fixed with respect to each other, such that a relative spatial position of the first scanning device with respect to the second scanning device, in particular of the respective movable mirrors thereof with respect to each other, may be fixed.

According to some embodiments of the invention, each of the first and second scanning devices may further comprise a respective galvanometer motor for tilting the respective second movable mirror. The first scanning device may comprise a first galvanometer motor for tilting the second movable mirror of the first scanning device and the second scanning device may comprise a second galvanometer motor for tilting the second movable mirror of the second scanning device. The first and second scanning devices may further comprise or be connected to corresponding control units controlling an operation of the galvanometer motors and hence a corresponding tilting movement of the respective second movable mirror. The first movable mirrors of the first and second scanning devices may also be connected to respective galvanometer motors driving their tilting movement and, optionally, control units controlling their operation.

The mirror-symmetric and aligned arrangement of at least the second movable mirrors according to the invention allows arranging the first galvanometer motor and the galvanometer stepper motor on opposite sides of the respective second movable mirror with respect to the common plane of mirror symmetry, such that the first galvanometer motor and the second galvanometer motor are arranged mirror-symmetrically with respect to each other and to the common plane of mirror symmetry, while keeping a minimal distance between the second movable mirrors. Although the galvanometer motors are relatively voluminous devices, the arrangement according to the invention allows for their spatial distribution in a space-efficient manner such that they do not come in contact with each other, obstruct the mobility of other optical components, in particular, the movable mirrors or block any beam path inside the deflection module.

The first and second galvanometer motors may be arranged extending substantially perpendicular to the common plane of mirror symmetry, in particular respectively extending from a first end proximal to the corresponding second movable mirror to a second end distal from said corresponding second movable mirror (and from the common plane of mirror symmetry). The second movable mirror of the first scanning device may hence be arranged, in a direction substantially perpendicular to the common plane of mirror symmetry, between the first galvanometer motor and the common plane of mirror symmetry, while the second movable mirror of the second scanning device may be arranged, in said direction substantially perpendicular to the common plane of mirror symmetry, between the second galvanometer motor and the common plane of mirror symmetry. The first galvanometer motor may further be aligned with the second galvanometer motor in said direction substantially perpendicular to the common plane of mirror symmetry.

Notably, the rotation axis of the first and second galvanometer motors needs not coincide with the respective rotation axis of the corresponding second movable mirror, although this can be the case in some embodiments. The axis of rotation of the first and/or second galvanometer motors may be arranged parallel - with an offset - to the respective one of the second and fourth axes or with an inclination with respect thereto of up to 15°.

Although the mirror-symmetry and the alignment of the deflection module of the invention is at least formed by the second movable mirrors of the first and second scanning devices, further components of the first and second deflection units may display the same mirror-symmetry - with respect to the same common plane of mirror symmetry - and/or may be aligned or parallel with respect to each other. For example, the first movable mirror of the first scanning device and the first movable mirror of the second scanning device may be arranged mirror-symmetrically with respect to each other and to the common plane of mirror symmetry. The first axis may however be arranged essentially in parallel to the third axis, wherein the first and third axes may be arranged essentially parallel to the common plane of mirror symmetry, for example aligned with the vertical z-direction or arranged with respect to the vertical z-direction with an inclination from about 0° to about 15°.

In some embodiments, the first and third axes may be arranged parallel to each other and to the common plane of mirror symmetry and respectively perpendicular to the second and fourth axes, and the second and fourth axes may be arranged aligned with each other and perpendicular to the common plane of mirror symmetry and to the first and third axes.

According to some embodiments, the first working beam may be incident on the first scanning device, in particular on the first movable mirror thereof, propagating in a first incidence direction perpendicular to the common plane of mirror symmetry, and the beam path of the second working beam may be incident on the second scanning device, in particular on the first movable mirror thereof, propagating in a second incidence direction perpendicular to the common plane of mirror symmetry, wherein the first incidence direction may be aligned with and opposed to the second incidence direction. Thus, the first working beam and the second working beam may be in line with each other, at least until they reach the respective scanning device.

According to some embodiments, the first deflection unit and the second deflection unit may be arranged mirror-symmetrically with respect to the common plane of mirror symmetry and/or with respect to each other, such that a beam path of the first working beam, at least before being scanned by the first scanning device, and a beam path of the second working beam, at least before being scanned by the second scanning device are mirror symmetric with respect to each other and to the common plane of mirror symmetry. Thus, the beam path followed by the first working beam within the first deflection unit, at least until the first working beam is deflected by the first scanning unit, may be mirror-symmetric to the beam path followed by the second working beam within the second deflection unit, at least until the second working beam is deflected by the second scanning unit. Thus, the beam path followed by the first working beam within the first deflection unit and the beam path followed by the second working beam within the second deflection unit may be specular images of each other with respect to the common plane of mirror symmetry.

The "mirror symmetry" of the first and second deflection units with respect to each other may refer to the position and/or settings of each of the optical components thereof, such as mirrors and lenses, and to the corresponding light beam paths they define for the respective working beam, in particular when the orientation and/or settings of each of the optical components of the first deflection unit - with which the first working beam interacts on its way to the first working beam - corresponds to the corresponding orientation and/or settings of the respective optical components of the second deflection unit - which the second working beam interacts on its way to the second working field, wherein the latter optical components may be a specular image of the former components with respect to the common plane of mirror symmetry. "Settings" may refer to the optical properties of an optical component, such as focal length, diameter or size, shape, aperture, etc. For example, a first optical lens of the first deflection unit arranged such as to be a specular image of a second optical lens of the second flection unit with respect of the common plane of mirror symmetry may have the same focal length, size and shape as said second optical lens.

This notwithstanding, the mirror symmetry does not necessarily imply that the first and second deflection units must always be configured such as to maintain this symmetry with respect to each and every one of the optical components and settings at any time, in particular with respect to the first scanning device and the second scanning device, which may operate independently form each other. For example, it needs not be the case that whenever the first deflection unit, by means of the first scanning device, directs the first working beam to a point on the first working field, the second deflection unit correspondingly directs, by means of the second scanning device, the second working beam to a point on the second working field corresponding to a specular image of the first working beam with respect to the axis of mirror symmetry. Instead, each of the first and second deflection units may be configured to operate independently, such that the optical components thereof, in particular the lenses and/or mirrors of the first and second scanning devices, may take during operation different positions and orientations that may break the general mirror symmetry of the deflection module.

For example, a tilt of the first movable mirror around the first axis may be different, at any given time, from a tilt of the first movable mirror around the third axis (i.e. not correspond to a specular image thereof), and a tilt of the second movable mirror around the second axis may be different from a tilt of the second movable mirror around the fourth axis are arranged mirror-symmetrically with respect to each other and to a common plane of mirror symmetry.

In some embodiments, the beam path of the first working beam before being scanned by the first scanning device may be aligned with the beam path of the second working beam before being scanned by the second scanning device in a direction perpendicular to the common plane of mirror symmetry. In other words, before being deflected by the respective scanning devices, the first working beam and the second working beam may be coplanar, i.e. lie on a common plane, wherein the common plane may in particular be perpendicular to the common plane of mirror symmetry. This provides a particularly compact configuration by having both the first working beam - and the corresponding optical elements defining a beam path of the first working beam at least up to the first scanning device - and the second working beam - and the corresponding optical elements defining a beam path of the second working beam at least up to the second scanning device - arranged on a plane, which may allow for a reduction of the width of the deflection module and hence of the volume thereof.

According to some embodiments of the invention, a separation between the second movable mirror of the first scanning device and the second movable mirror of the second scanning device may correspond to not more than 1/3 of a diameter of the second movable mirror of the first scanning device and/or of the second movable mirror of the second scanning device, preferably not more than 1/4 thereof, more preferably not more than 1/5 or 1/6 thereof. "Separation" may refer herein to a shortest definable Euclidian distance. The separation between the second movable mirror of the first deflection unit and the second movable mirror of the second deflection unit may be a separation distance between an edge of the second movable mirror of the first deflection unit and an edge of the second movable mirror of the second deflection unit in a direction perpendicular to the common plane of mirror symmetry, in particular in the direction in which the second and fourth axes extend. In some embodiments, the diameter of the second movable mirror of the first scanning device may be equal to the diameter of the second movable mirror of the second scanning device. "Diameter", as used herein for mirrors, may refer not only to the size of movable mirrors having a circular shape, but any geometrical quantity defining the length of a main axis of the respective movable mirror. For example, if a movable mirror has an oval or elliptical shape, "diameter" may refer to the minor or major axis thereof. If a movable mirror has a square or rectangular form, "diameter", as used herein, may refer to the length or width thereof.

According to some embodiments, a shape and size of the second movable mirror of the first scanning device and of the second movable mirror of the second scanning device may be equal. Irrespectively of whether the second movable mirrors of the first and second scanning devices are equal or not in shape and size, each of them may have a circular, elliptical, square, rectangular, rhombic or polygonal shape, in particular the reflection surface thereof. The second movable mirrors may be arranged such that the corresponding axis around which the movable mirror is tiltable, for example when correspondingly driven by a respective galvanometer motor, coincides with a main axis of the movable mirror. For example, if the second movable mirrors have an elliptic shape, the second and fourth axes may be aligned with the major axes of the ellipses defined by the second movable mirrors (and aligned with each other). If the second movable mirrors have a rectangular shape, the second and fourth axes may be aligned with the longitudinal axis of symmetry of the rectangle defined by the second movable mirrors (and aligned with each other). If the second movable mirrors have circular shape, the second and fourth axes may be aligned with the diameter of the circle defined by the second movable mirrors (and aligned with each other).

Similar considerations may apply to the first movable mirrors of the first and second scanning devices, wherein the first movable mirrors may be arranged such that the corresponding axis around which the movable mirror is tiltable, for example when correspondingly driven by a respective galvanometer motor, coincides with a minor axis of the movable mirror. For example, if the first movable mirrors have an elliptic shape, the first and third axes may be aligned with the minor axes of the ellipses defined by the first movable mirrors (and aligned with each other). If the first movable mirrors have a rectangular shape, the first and third axes may be aligned with the shorter axis of symmetry of the rectangle defined by the first movable mirrors.

According to some embodiments, a diameter of the second movable mirror of the first scanning device and/or of the second movable mirror of the second scanning device may be from 5 mm to 50 mm, preferably from 10 mm to 40 mm, more preferably from 20 mm to 30 mm. The same considerations may apply to the first movable mirrors of the first and second scanning devices.

According to some embodiments of the invention, a distance between a an optical centre of the second movable mirror of the first scanning device and an optical centre of the second movable mirror of the second scanning device may correspond to not more than 4 times an aperture of the first movable mirror of the first scanning device and/or of the first movable mirror of the second scanning device, preferably not more than 3 times thereof, more preferably not more than 2,5 or 2 times thereof.

In embodiments in which the second movable mirror of each of the first and second scanning devices is arranged after the corresponding first movable mirror, the "aperture" of the respective first movable mirror may refer to the extension (diameter) of the respective first movable mirror in a direction parallel to corresponding axis of rotation, i.e. to the first or third axis, respectively. For example, if a first movable mirror has an oval or elliptical shape, the aperture may correspond to the minor axis of the oval or ellipse. If the first movable mirror has a square or rectangular shape, the aperture may correspond to the shorter side or "width" thereof. The aperture of the first movable mirrors may be adapted to working beams of a given beam diameter, for example of a given 1/e² diameter.

The dimensions of the corresponding second movable mirrors may be configured for reflecting working beams of a given diameter, for example of a given 1/e² diameter, after being reflected by the corresponding first movable mirror at a given angle of incidence. For example, if a second movable mirror has an oval or elliptical shape, the major axis thereof, which may be aligned with the corresponding axis of rotation, i.e. with the second or fourth axis, may be dimensioned such as to be able to reflect the working beam coming from the respective first movable mirror taking into account the separation distance between the first and second movable mirrors and the range of possible angles of incidence of the working beam on the second movable mirror depending on a tilt angle of the respective first movable mirror. The dimensions of the second movable mirror may further be adapted to working beams of a given beam diameter, for example of a given 1/e² diameter.

The dimensions of the second movable mirrors, in particular the diameter thereof, may be greater than the dimensions of the corresponding first movable mirror. For example, if the first movable mirror and the second movable mirror both have an oval shape, the minor axis of the second movable mirror may be greater than the minor axis of the first movable mirror.

For instance, assuming a Gaussian distribution of the intensity profile of the working beams in the cross-sections thereof, the first working beam may be incident on the first scanning device, in particular on the first movable mirror of the first scanning device, having a first 1/e² beam diameter, and the second working beam may be incident on the second scanning device, in particular on the first movable mirror of the second scanning device, having a second 1/e² beam diameter. The second beam diameter may preferably be equal to the first beam diameter. The aperture of the first movable mirror of the first scanning device and/or the aperture of the first movable mirror of the second scanning device may be defined herein to correspond to at least 1,1 times, preferably at least 1,3 times, more preferably at least 1,5 times the respective 1/e² beam diameter. For example, for first and second working beams having each a 1/e² beam diameter of 20 mm, the corresponding apertures of the respective first movable mirrors may be 30 mm (1,5 times the 1/e² beam diameter) and the corresponding distance between the optical centres of the respective second movable mirrors may be 75 mm.

According to the claimed invention, a distance between the optical centre of the second movable mirror of the first scanning device and the optical centre of the second movable mirror of the second scanning device is not more than 120 mm, preferably not more than 80 mm, more preferably not more than 60 mm. However, this feature may be optional in non-claimed embodiments.

According to some embodiments, a distance between the second movable mirror of the first scanning device and the second movable mirror of the second scanning device may correspond to not more than 1/3 of the aperture of the first movable mirror of the first scanning device and/or of the second scanning device, preferably not more than 1/4 thereof, more preferably not more than 1/5 or 1/6 thereof.

According to some embodiments, a separation between the second movable mirror of the first scanning device and the second movable mirror of the second scanning device may be not more than 50 mm, preferably not more than 30 mm, more preferably not more than 10 mm.

Each of the first and second working fields may cover an area of 100 mm x 100 mm to 1000 mm x 1000 mm, preferably from 300 mm x 300 mm to 700 mm x 700 mm, more preferably from 400 mm x 400 mm to 600 mm x 600 mm. The first and second working fields may have the same shape and size. The first working field and the second working field may be aligned with each other in a direction parallel to the common plane of mirror symmetry, such that they cover the same distance and extension on said direction parallel to the common plane of mirror symmetry, i.e. extend in said direction from a first common corner point to a second common corner point. In said direction parallel to the common plane of mirror symmetry, the common overlap area may hence have an extension corresponding to 100% of the extension covered by the first and/or second working field in said direction parallel to the common plane of mirror symmetry.

In some embodiments of the invention, the first and second working fields may partly overlap in an overlap direction perpendicular to the common plane of mirror symmetry, wherein the common overlap area may have an extension in the overlap direction corresponding to at least 75%, preferably at least 80%, more preferably at least 90% of the extension covered by the first and/or second working field in the overlap direction. Thus, the common overlap area may have an extension in the overlap direction from 75 mm to 900 mm and an extension in a direction parallel to the common plane of mirror symmetry of 100 mm to 1000 mm, preferably an extension in the overlap direction from 225 mm to 630 mm and an extension in a direction parallel to the common plane of mirror symmetry of 300 mm to 700 mm, more preferably an extension in the overlap direction from 300 mm to 540 mm, and an extension in a direction parallel to the common plane of mirror symmetry of 400 mm to 600 mm. The common overlap area may for example be 400 mm x 500 mm.

While other solutions known from the prior art for having more than one deflection unit operating on a common working area of overlapping working fields are based on increasing the scan radius, the inventors of the present invention have realised that small separations between the second movable mirrors of the first and second scanning devices and/or of the optical centres thereof - in particular separations within the aforementioned ranges - can be achieved in combination with the aforementioned areas of the common overlapping area while keeping a compact size of the deflection module, and notably, without having to increase the scan radius, thanks to the symmetrical arrangement and configuration of the first and second deflection units according to the invention. By avoiding an increase in the scan radius, a large common overlap area of the working fields of different deflection units can be achieved without increasing the scan radius.

According to some embodiments of the invention, a height of the second movable mirror of the first scanning device over the first working field and/or a height of the second movable mirror of the second scanning device over the second working field, i.e. the respective scan radii, may be not more than 800 mm, preferably not more than 600 mm, more preferably not more than 400 mm. The height of the second movable mirror of the first scanning device over the first working field and the height of the second movable mirror of the second scanning device over the second working field may be equal to each other. Scan radii within the aforementioned ranges can be achieved in combination with small separations between the second movable mirrors of the first and second scanning devices, in particular separation within the aforementioned ranges, by means of the symmetric arrangement of the components of the first and second scanning units according to the invention. The aforesaid scan radii may be implemented by the first and second deflection units by correspondingly setting the focal length of their respective optical systems, such that the first and second working beams be focused on the first and second working fields, respectively, i.e. at distances from the corresponding scanning device corresponding to the aforesaid scan radii.

Thus, the invention allows combining the technical advantages of a large common overlap area in which the first deflection unit and the second deflection unit may cooperatively operate to laser-process one or more workpieces simultaneously and of a reduced scan radius, which results in a more compact design and higher optical accuracy, due for a example to a reduced inclination of the working beams when laser-processing a workpiece in the peripheral portions of the respective working fields.

Further, by allowing a reduced scan radius, the deflection module of the invention allows having a reduced working volume (i.e. the three-dimensional vertical projection of the working fields, in particular of the common overlap area). When a fluid flow through the working volume is used to carry away gaseous residues resulting from the laser processing of the workpiece within the working volume, which could otherwise negatively affect the laser work by absorbing part of the light of the working beams, the required amount of fluid in the working volume can be reduced due to the decreased working volume. The fluid flow may for example be a flow of an inert gas, such as argon, which allows suppressing an oxidation of the material used for forming the workpiece, for example metallic powder, during the laser processing. Reducing the amount of inert gas required contributes to a considerable cost reduction of the entire laser-processing process in view of the high costs of inert gases. In addition, thanks to the reduced working volume, the flowing behaviour of the fluid flow within the working volume, for example the formation of turbulent phenomena, may be easier to control.

In some embodiments, the deflection module may further comprise a housing, wherein the first deflection unit and the second deflection unit may be enclosed within the housing. The housing, which may for example be of a material comprising aluminium and/or stainless steel, may preferably be waterproof and/or dustproof. This way, a thermal shift of the optical components of the deflection module, which may result from the accumulation of dust, dirt, humidity and/or water, can be reduced, whereby the working precision and definition of the deflection module can be preserved due to the sealing effect of the housing. Further, the housing may protect the deflection module during transportation or maintenance, thereby enhancing the advantageous modular design and easy replaceability of the deflection module according to the invention.

According to some embodiments, the housing may comprise a first transparent window configured for letting though the first working beam propagating from the first scanning device to the first working field and a second transparent window configured for letting through the second working beam propagating from the second scanning device to the second working field. The first transparent window may be arranged below the second movable mirror of the first scanning device and aligned therewith in a vertical direction (i.e. in a z-direction perpendicular to the first working field), such that the first transparent window may hence form an optical output window of the first deflection unit, through which the first working beam is last transmitted before reaching the first working field. The second transparent window may be arranged below the second movable mirror of the second scanning device and aligned therewith in a vertical direction (i.e. in a z-direction perpendicular to the second working field), such that the second transparent window may hence form an optical output window of the second deflection unit, through which the second working beam is last transmitted before reaching the second working field. The first transparent window and/or the second transparent window may comprise a glass plate. In some embodiments the first transparent window and the second transparent window may be integral with each other. For example, the first transparent window and the second transparent window may be formed by one and the same glass plate.

The first transparent window and the second transparent window may be adjacent to each other. Additionally or alternatively, the first transparent window and the second transparent window may be adjacent to the same lateral wall of the housing, such that the first and second transparent windows and said lateral wall of the housing, which may be arranged perpendicular to the first and second transparent windows, may share a common edge. As will be explained below, this configuration has the advantage of providing a configuration in which the first and second transparent windows of a deflection module are arranged adjacent to the first and second transparent windows of another deflection module, when both deflection modules abut each other by the corresponding lateral wall (the lateral wall that is adjacent to the respective first and second transparent windows).

According to some embodiments, the first deflection unit and/or the second deflection unit may further comprise an optical element, preferably a dichroic and/or reflective mirror, for reflecting light in a first wavelength range of the first and/or second working beam, respectively, at least partially, wherein the respective scanning device is arranged in the beam path of the corresponding working beam between the corresponding working field and the corresponding optical element, such that the corresponding working beam propagates to the corresponding scanning device being reflected at the corresponding optical element. The optical element may hence operate as a deviator/reflector for the corresponding working beam for deflecting the working beam coming from a first direction, for example from an input window and/or from a laser light source, to a second direction, in particular towards the corresponding scanning device.

For example, if a working beam (the first and/or second working beam) is generated by a light source arranged with respect to the respective working field such that the working beam comes out from the light source propagating in the vertical direction (z-direction), i.e. perpendicular to the respective working field, the optical element may be arranged at a 45° angle with respect to said vertical direction, such as to deviate the working beam from the vertical direction to a horizontal direction (e.g. x- and/or y- direction), such that it reaches the scanning device in said horizontal direction. However, other configurations are possible. In particular, the working beam (the first and/or second working beam) can also be generated by a light source arranged with respect to the respective working field such that the working beam comes out from the light source propagating in the horizontal direction (e.g. x- and/or y-direction) or propagating in a diagonal direction having a vertical component and a horizontal component.

The optical element may further be configured for transmitting light in a second wavelength range of the first and/or second working beam at least partially. This allows the respective deflection unit to define a detection beam path followed by a detection beam in the second wavelength range, for example from the corresponding working field to a corresponding detection device, such that, when said detection beam propagates back from the working field, it is directed (transmitted) to the detection device instead of being reflected back towards the light source. The detection beam can then propagate from said corresponding working field to said corresponding detection device being reflected by the corresponding scanning device and transmitted by the corresponding optical element.

Thus, the optical element may be used as a reflection element for redirecting the corresponding working beam, formed by light in the first wavelength range, for example between nm and 1100 nm, towards the corresponding scanning device on its way towards the corresponding working field. At the same time, the optical element may further be used as a transmission element letting through a detection beam coming from the respective working field, formed by light in the second wavelength range, for example below 1000 nm or over 1100 nm, towards a detection unit configured for detecting said detection beam. The detection beam may be used to obtain information about the workpiece being formed and hence to monitor the laser-processing and/or about the conditions of the laser-processing by the working beams. For example, the detection beam may be used to calibrate and/or synchronise the working beams.

The optical element may hence decouple a working beam from the corresponding detection beam, thereby allowing to control the optical settings thereof independently as explained in European patent application EP 3 532 238 A1 (e.g. paragraphs [0018] and [0019] thereof). Thereby, aberrations of the detection beam can be avoided and the monitoring functionalities can remain focused. The detection unit may comprise an optical sensor, an optical camera, a diode, a pyrometric device, an optical coherent tomography detector and the like. The optical element and the detection unit may respectively correspond to an optical element ("optisches Element") and a detection device ("Detektionseinrichtung") as described in European patent application EP 3 532 238 A1.

According to some embodiments, the first deflection unit and/or the second deflection unit may further comprise a focusing device for focusing, zooming and/or collimating the respective working beam. The focusing device may be arranged along the beam path followed by the respective working beam before the respective scanning device and before the respective optical element. The focusing unit may have a variable focal length. The focusing unit may comprise a first fixed lens, a first movable lens and a further fixed or movable lens. The focusing device may in particular correspond to a focussing device ("Fokussiervorrichtung") as described in EP 3 532 238 A1. The skilled person shall understand that any of the aforementioned "lenses" may be formed by a corresponding group of lenses and needs not be formed by a single lens. The focusing device may be configured for setting the focal length of the respective optical systems (i.e. the first or second deflection unit, respectively), such that the first and second working beams be focused on the first and second working fields, respectively, i.e. at distances from the corresponding scanning device corresponding to the corresponding scan radius, in particular to a scan radius in the previously described ranges.

Another aspect of the present invention refers to a modular deflection system comprising a first deflection module and a second deflection module, wherein the first deflection module and the second deflection module may correspond to any of the embodiments of a deflection module according to the invention described above. In some embodiments, the first deflection module and the second deflection module may have an identical or at least similar configuration, i.e. may have identical or at least similar or equivalent optical components and settings.

The first deflection module and the second deflection module of the modular deflection system of the invention may be mutually attached or attachable. In some embodiments, the first deflection module and the second deflection module may be configured to be removably attached to each other. When the first deflection module and the second deflection module are attached to each other, the common overlapping area of the first deflection module and the common overlapping area of the second deflection module overlap, thereby forming a common overlap field. The common overlap field hence constitutes an overlap area of the first and second working fields of the first deflection module and of the first and second working fields of the second deflection module.

Thus, up to four deflection units, the first and second deflection units of the first deflection module and the first and second deflection units of the second deflection module can cooperate to laser-process one or more workpiece simultaneously in the common overlap field, thereby achieving a high degree of parallelisation. At the same time, due to the compact configuration of the deflection modules according to the invention, an overall size of the modular deflection system can remain rather moderate, in particular a vertical dimension thereof, in view of the small ratio of the respective scan radii to the respective common overlap areas provided by the configuration of each of the first and second deflection modules. The modular deflection system of the invention hence provides a highly compact arrangement of four independent deflection units that may operate simultaneously on the common overlap field to laser-process the same workpiece or workpieces. The modular deflection system may profit from all technical advantages of the deflection module according to the invention referred to above.

The compact configuration of each of the deflection modules according to the invention allows mutually attaching the first deflection module and the second deflection module such that the scanning devices thereof, and in particular the second movable mirrors thereof, can be arranged very close to each other.

Further, the modular structure of the modular deflection system of the invention allows for an improved design flexibility and for reduced maintenance complexity. For example, if one of the deflection modules of the modular deflection system must be inspected or repaired by the manufacturer, it can be easily detached from the modular deflection system, replaced by a corresponding replacement deflection module, and transported to a manufacturer site, such that the modular deflection system may continue to be employed at a customer end and production needs not be interrupted.

According to some embodiments, the first deflection module and the second deflection module may be mirror-symmetrical with respect to each other, when the first deflection module and the second deflection module are mutually attached. When the first and second deflection modules are mutually attached, the common plane of mirror symmetry of the first deflection module may be aligned with the common plane of mirror symmetry of the second deflection module.

The modular and symmetric design of the modular deflection system of the invention allows having a reduced separation, not only between the movable mirrors of each of the first and second deflection modules, for example between the second movable mirror of the first scanning device of the first deflection module and the second movable mirror of the second scanning device of the first deflection module, but further between a movable mirror of the first deflection module and a movable mirror of the second deflection module, in particular between the second movable mirror of the first deflection module and the second movable mirror of the second deflection module. This is particularly the case when the second movable mirrors of each of the first and second deflection modules are arranged offset from a longitudinal axis of the respective deflection module, for example when the second movable mirror and a corresponding transparent window located below said second movable mirror are arranged adjacent to a lateral wall of a respective housing of the deflection module. Having the same situation, actually a specular image thereof, in the other deflection module of the modular deflection system, allows for a small separation distance between the second movable mirrors of different deflection modules and hence contributes to the compact design of the modular system and to an increased ratio of the size of the common overlap field to the scan radii of the modular system.

According to some embodiments of the invention, a distance between an optical centre of the second movable mirror of the first scanning device of the first deflection module and an optical centre of the second movable mirror of the first or second scanning device of the second deflection module may correspond to not more than 4 times an aperture of the first movable mirror of the first scanning device and/or of the first movable mirror of the second scanning device of the first or second deflection module, preferably not more than 3 times thereof, more preferably not more than 2,5 or 2 times thereof.

According to some embodiments, a separation between the second movable mirror of the first scanning device of the first deflection module and the second movable mirror of the first or second scanning device of the second deflection module may correspond to not more than 1/3 of a diameter of the second movable mirror of the first scanning device of the first deflection module and/or of the second movable mirror of the first or second scanning device of the second deflection module, preferably not more than 1/4 thereof, more preferably not more than 1/5 or 1/6 thereof, wherein the aperture may be defined as explained above.

A diameter or aperture of the first or second movable mirror of the first and/or second scanning device of the first deflection module may be equal to a diameter or aperture of the first or second movable mirror of the first and/or second scanning device of second deflection module. In particular, all four first or second movable mirrors of the modular deflection system may have the same diameter, aperture, size and/or shape.

In some embodiments, a distance between the optical centre of the second movable mirror of the first scanning device of the first deflection module and the optical centre of the second movable mirror of the first or second scanning device of the second deflection module may be greater than a distance between the optical centres of the second movable mirrors of the first or second deflection module, preferably up to 20% greater, more preferably up to 10% greater, most preferably up to 5% greater. However, the distance between the optical centre of the second movable mirror of the first scanning device of the first deflection module and the centre of the second movable mirror of the first or second scanning device of the second deflection module may be essentially equal to the distance between the optical centres of the second movable mirrors of the first or second deflection module. The same applies to a distance between the optical centre of the second movable mirror of the second scanning device of the first deflection module and the centre of the second movable mirror of the first or second scanning device of the second deflection module.

According to some embodiments, a distance between the optical centre of the second movable mirror of the first or second scanning device of the first deflection module and the optical centre of the second movable mirror of the first or second scanning device of the second deflection module may be not more than 120 mm, preferably not more than 80 mm, more preferably not more than 60 mm.

According to some embodiments, a separation between the second movable mirror of the first scanning device of the first deflection module and the second movable mirror of the first or second scanning device of the second deflection module may be not more than 50 mm, preferably not more than 30 mm, more preferably not more than 10 mm. The separation between the second movable mirror of the first scanning device of the first deflection module and the second movable mirror of the first or second scanning device of the second deflection module may be greater than a distance between the second movable mirrors of the first or second deflection module, preferably up to 20% greater, more preferably up to 10% greater, most preferably up to 5% greater. This may allow avoiding a risk of collision or interference between second movable mirrors of different deflection modules.

The first deflection module may comprise a first housing, wherein the first deflection unit and the second deflection unit of the first deflection module are enclosed within the first housing. The first housing may be dustproof and/or waterproof. The second deflection module may comprise a second housing, wherein the first deflection unit and the second deflection unit of the second deflection module may be enclosed within the second housing. The second housing may be dustproof and/or waterproof. The first housing and the second housing may be mutually attachable in such a manner that the first housing and the second housing are arranged adjacent to each other, when the first deflection module and the second deflection module are attached to each other. The second housing may be a specular image of the first housing, when the first and second housings are attached together.

According to some embodiments, the first housing may comprise a first transparent window through which the respective first working beam propagates from the first scanning device of the first deflection module to the respective first working field and a second transparent window through which the respective second working beam propagates from the second scanning device of the first deflection module to the respective second working field. Further, the second housing may comprise a third transparent window through which the respective first working beam propagates from the first scanning device of the second deflection module to the respective first working field and a fourth transparent window through which the respective second working beam propagates from the second scanning device of the second deflection module to the respective second working field. The first transparent window, the second transparent window, the third transparent window and/or the fourth transparent window may be arranged adjacent to each other when the first deflection module and the second deflection module are attached to each other.

In other embodiments, the modular deflection system may comprise a common housing, wherein the first and second deflection units of the first deflection module and the first and second deflection units of the second deflection module may be enclosed within the common housing. The common housing may be dustproof and/or waterproof.

Each of the first and second working fields of the first deflection module and each of the first and second working fields of the second deflection module may cover an area of 100 mm x 100 mm to mm x mm, preferably from 300 mm x 300 mm to 700 mm x 700 mm, more preferably from 400 mm x 400 mm to 600 mm x 600 mm. The first and second working fields of the first deflection module may be aligned with each other in a first overlap direction, and the first and second working fields of the second deflection module may be aligned with each other in said first overlap direction as well. Said first overlap direction may be parallel to the common plane of mirror symmetry of the first and second deflection modules. Further, the first working field of the first deflection module may be aligned with one of the first and second working fields of the second deflection module in a second overlap direction perpendicular to the first overlap direction and the second working field of the first deflection module may be aligned with the other one of the first and second working fields of the second deflection module in the second overlap direction.

In each of the first and second overlap directions, the common overlap field may have an extension corresponding to at least 75%, preferably at least 80%, more preferably at least 90% the extension covered by the first and/or second working fields of the first and/or second deflection modules in the corresponding overlap direction. Thus, in some embodiments of the invention, the common overlap field may have an extension in each of the first and second overlap directions from 70 mm to 800 mm (covering an area from 70 mm x 70 mm to 800 mm x 800 mm), preferably from 220 mm to 600 mm (covering an area from 220 mm x 220 mm to 600 mm x 600 mm), more preferably from 300 mm to 540 mm (covering an area from 300 mm x 300 mm to 540 mm x 540 mm). The common overlap field may for example be 330 mm x 330 mm.

A further aspect of the invention refers to a method of laser processing one or more workpieces using a deflection module or a modular deflection system according to any of the embodiments of the invention previously described. The method comprises laser processing the work piece by a first working beam deflected by a first deflection unit of the deflection module or the modular deflection system, wherein the first working beam has a first power density. The method further comprises laser processing the work piece by the second working beam deflected by a second deflection unit of the deflection module or the modular deflection system, wherein the second working beam has a second power density, wherein the second power density is higher than the first power density. A "power density" refers herein to surface power density, i.e. to beam power divided by unit area of the corresponding working field. The second power density may be 1,5 times, 3 times, 5 times or 10 times higher than the first power density.

According to the method of the invention, at least in a subregion of the common overlapping area (or of the common overlap field if the used deflection module is integrated in a modular deflection system according to any of the previously described embodiments of the invention), the workpiece is laser processed by the first working beam, at a lower power density, before or after being processed by the second working beam, at a higher power density.

Thus, the method according to the invention allows using the first working beam deflected by the first deflection unit for warming up the material used for forming a given one of the one or more workpieces in a warm-up phase by using a lower beam power before using the second working beam deflected by the second deflection unit for laser processing the work piece at regions of the workpiece that have been previously warmed at by the first working beam. Additionally or alternatively, the first working beam deflected by the first deflection unit may be used for progressively cooling down the material used for forming the one or more workpieces in a cool-down phase by using a lower beam power density after using the second working beam deflected by the second deflection unit. Thereby, the thermal variations of the material used for forming the one or more workpieces can be smoothed or flattened in time by being divided into more than one progressive stages: e.g. warming up to a lower temperature by the first working beam, then melting at a higher temperature by the second working beam, and then cooling down to a lower temperature by the first working beam. Partial melting may also occur during the warm-up and/or during the cool-down phase. This allows reducing the temperature gradients undergone by the material used for forming the workpiece and hence prevents the formation of irregularities due to strong thermal gradients.

According to some embodiments, the first working beam and the second working beam may have the same beam power, wherein the first working beam may have a greater spot size than the second working beam. Thus, the different beam power densities can be implemented using working beams having the same beam power, for example by using identical laser sources for generating both the first working beam and a second working beam. Additionally or alternatively, the first working beam and the second working beam may have the same spot size, wherein the first working beam may have a smaller beam power than the second working beam. Thus, it is also possible to implement the different beam power densities by using identical spot sizes but different beam powers.

The aforesaid method may further be implemented with a modular deflection system according to any of the previously described embodiments, i.e. a modular deflection system comprising a first and a second deflection module, with each deflection module comprising two deflection units. The method may comprise laser processing the work piece by at least one (of the four available) working beams and laser processing the work piece by the remaining working beams. For example, the first working beam deflected by the first deflection unit of the first deflection module and the first working beam deflected by the first deflection unit of the second deflection module may be operated with the first beam power and used for warming up the material used for forming a given one of the one or more workpieces and the second working beam deflected by the second deflection unit of the first deflection module and the second working beam deflected by the second deflection unit of the second deflection module may subsequently be operated with the second beam power for laser-processing said given one of the one or more workpieces. All working beams, i.e. all deflection units, may in any case operate simultaneously.

### BRIEF DESCRIPTION OF THE DRAWINGS

- Fig. 1: shows perspective view of the interior of a deflection module according to embodiments of the invention.
- Fig. 2: shows a schematic top view of a deflection module like the deflection module of Fig. 1 according to some embodiments of the invention.
- Fig. 3: shows a schematic side view of a deflection module like the deflection module of Fig. 1 according to some embodiments of the invention.
- Fig. 4: shows a schematic illustration of the working fields and the common overlapping area of a deflection module according to some embodiments of the invention.
- Fig. 5: is a schematic flow diagram of a method of laser processing a work piece according to some embodiments of the invention.
- Fig. 6: shows schematic perspective views of the exterior of a deflection module according to some embodiments of the invention. Fig. 6a shows a superior perspective view and Fig. 6b shows an inferior perspective view.
- Fig. 7: shows a schematic perspective view of the exterior of a modular deflection system according to some embodiments of the invention. Fig. 7a shows a superior perspective view and Fig. 7b shows an inferior perspective view.
- Fig. 8: shows a schematic top view of the interior of a modular deflection system like the modular deflection system of Fig. 7 according to some embodiments of the invention.
- Fig. 9: shows a schematic illustration of the working fields and the common overlap field of a modular deflection system like the modular deflection system of Fig. 7 according to some embodiments of the invention.

### DETAILED DESCRIPTION OF PREFERRED EMBODIMENTS

For the purposes of promoting an understanding of the principles of the invention, reference will now be made to a preferred embodiment illustrated in the drawings, and specific language will be used to describe the same. It will nevertheless be understood that no limitation of the scope of the invention is thereby intended, such alterations and further modifications in the illustrated apparatus and such further applications of the principles of the invention as illustrated therein being contemplated as would normally occur now or in the future to one skilled in the art to which the invention relates.

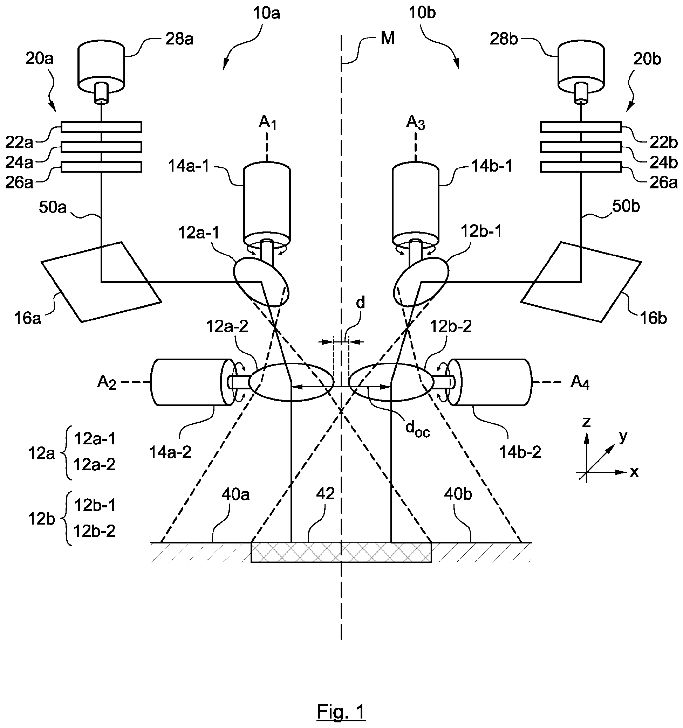

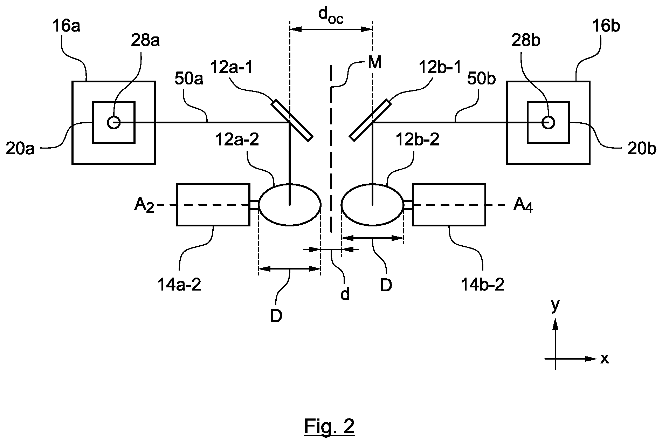

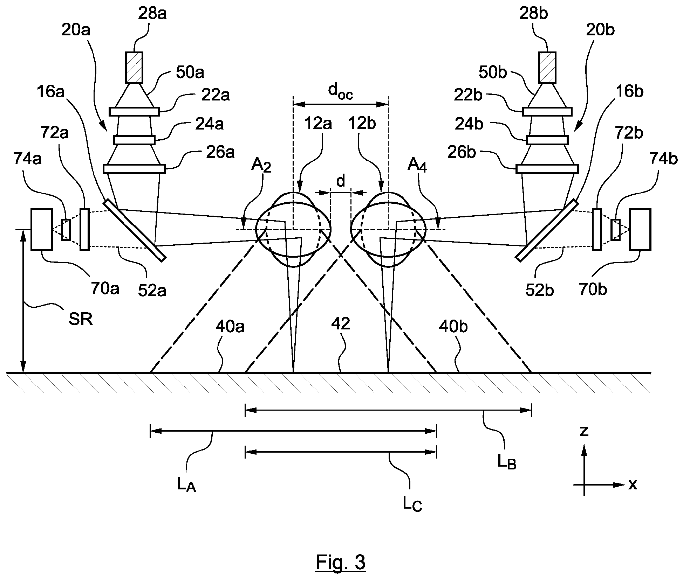

Fig. 1 shows a schematic perspective view of the interior of a deflection module according to some embodiments of the invention, in particular of the optical components included therein. The first deflection module comprises a first deflection unit 10a and a second deflection unit 10b. The first deflection unit 10a comprises a first scanning device 12a, which comprises a first movable mirror 12a-1 and a second movable mirror 12a-2. Fig. 2 and Fig. 3 respectively show a top view and a side view of a deflection module according to embodiments of the invention like the deflection module shown in Fig. 1, wherein the same reference numerals are used for the same components. For the following description, Figs. 1 to 3 may be considered in combination to the extent that they show the same components.

The first movable mirror 12a-1 is configured for scanning a first working beam 50a in a first direction, which in the embodiment shown in Fig. 1 corresponds to the x-direction, by tilting around a first axis A₁, which in the embodiment shown in Fig. 1 is arranged with an inclination relative to the vertical z-direction of about 15°. The movement or tilting of the first movable mirror 12a-1 of the first deflection unit 10a is driven by a galvanometer motor 14a-1 that is arranged extending along the first axis A₁, i.e. having a longitudinal axis corresponding to the largest dimension of the stepper motor 14a-1 extending along the first axis A₁.

The second movable mirror 12a-2 is configured for scanning the first working beam 50a, after the first working beam 50a is reflected by the first movable mirror 12a-1, in a second direction, which in the embodiment shown in Fig. 1 corresponds to an y-direction perpendicular to the x- and z-directions, by tilting around a second axis A₂, which in the embodiment shown in Fig. 1 is aligned with the x-direction. The movement or tilting of the second movable mirror 12a-2 of the first deflection unit 10a is driven by a galvanometer motor 14b-2 that is arranged extending substantially parallel to the second axis A₂, i.e. substantially perpendicular to the common plane of mirror symmetry M.

The first movable mirror 12a-1 and the second movable mirror 12a-2 thus form an XY-scanning device configured for scanning the first working beam 50a in the x- and y-directions over a two-dimensional working field 40a. One or more workpieces or start materials located within the working field 40a can hence be laser-processed by the first working beam 50a deflected by the first deflection unit 10a.

The first working beam 50a is generated by a first laser source 28a that is optically connected to the first deflection unit 10a and/or, in some embodiments, integrated in the first deflection unit 10a. In the embodiment under consideration, the first laser source 28a is configured for generating laser light with a wavelength of 1070 nm forming the first working beam 50a.

After being generated by the first laser source 28a, the working beam 50a propagates through a first focusing device 20a that is configured for focusing, zooming and collimating the working beam 50a. The focusing device 20a comprises a first movable lens 22a, a second movable lens 24a and a fixed lens 26a, wherein the movable lenses 22a and 24a can be shifted in the z-direction for adjusting a variable focal length of the first focusing device 20a and for zooming and collimating the first working beam 50a, thereby adjusting, for example, a beam diameter of the first working beam 50a. The first lens 22a may be a fixed lens in other embodiments. The first focusing device 20a operates as a focusing and zooming unit setting the focal length of the entire optical system of the first deflection unit 10a such that the first working beam 50a is focused on the first working field 40a, at a distance SR from the second movable mirror 12a-2 (cf. Fig. 3).

After propagating through the first focusing device 20a, the first working beam 50a is reflected by a first optical element 16a, which in the embodiment shown in Fig. 1 is a dichroic mirror configured for reflecting light in a first wavelength range from 1020 nm to 1080 nm, such that the first working beam 50a is deflected from the z-direction from which it arrives from the first laser source 28a to the x-direction, towards the first scanning device 12a (cf. Fig. 3, showing a side view in the zx-plane corresponding to the perspective view of Fig. 1).

In the embodiments shown in Fig. 1 to 3, the working beam 50a is generated by the first laser source 28a and fed into the first deflection unit in the vertical direction (in the z-direction). Therefore, the first optical element 16a is arranged at a 45° angle in the xz-plane with respect to each of the z- and x-directions (cf. Fig. 3). However, other configurations and corresponding arrangements of the first optical element 16a are possible. In other embodiments, the first working beam 50a may enter the first deflection units 10a in the horizontal x-direction or in a diagonal direction, for example a diagonal direction in the xz-plane, i.e. a direction having an x-component and a z-component, for instance at a 45° angle, although other angles are possible. The first optical element 16a may then be arranged at a corresponding angle for directing the first working beam 50a towards the first scanning device 12a, in particular towards the first movable mirror 12a-1. The same applies to the second deflection unit 10b (to be described in the following) with respect to the arrangement of the second laser source 28b and the second optical element 16b.

The deflection module further comprises a second deflection unit 10b having a structure, arrangement and optical components corresponding, possibly identical, to the components of the first deflection unit 10a. For example, the lenses 22b, 24b and 26b of the second focusing device 20b can be identical to the corresponding lenses 22a, 24a and 26a, respectively, of the first focusing device 20a. Likewise, the second optical element 16b of the second deflection unit 10b can be identical to the corresponding first optical element 16a of the first deflection unit 10a and be arranged accordingly to as to fulfil the same function. The second focusing device 20b operates as a focusing and zooming unit setting the focal length of the entire optical system of the second deflection unit 10b such that the second working beam 50b is focused on the second working field 40b, at a distance SR from the second movable mirror 12b-2 (cf. Fig. 3).

The second deflection unit 10a comprises a second scanning device 12b, which comprises a first movable mirror 12b-1 and a second movable mirror 12b-2, which respectively correspond in terms of function and structure to the first movable mirror 12a-1 and the second movable mirror 12a-2 of the first deflection unit 10a. The first movable mirror 12b-1 is configured for scanning a second working beam 50b, which is generated by a second laser source 28b that is functionally identical to the first laser source 28a, in the first direction (x-direction), by tilting around a third axis A₃, which in the embodiment shown in Fig. 1 is parallel to the first axis A₁, i.e. also arranged with respect to the vertical z-direction with an inclination of about 15°. The movement or tilting of the first movable mirror 12b-1 of the second deflection unit 10b is driven by a galvanometer stepper motor 14b-1 that is arranged extending along the first axis A₃, corresponding to the galvanometer motor 14a-1.

The second movable mirror 12b-2 is configured for scanning the second working beam 50b, after the second working beam 50b is reflected by the second optical element 16b and the first movable mirror 12b-1, for scanning the second working beam 50b in the second direction (y-direction), by tilting around a fourth axis A₄, which is aligned with the second axis A₂ in the x-direction (cf. Fig. 2, showing a top view in the xy-plane corresponding to the perspective view of Fig. 1). The movement or tilting of the second movable mirror 12a-2 of the first deflection unit 10a is driven by a galvanometer motor 14b-2 that is arranged extending substantially parallel to the fourth axis A₄ (and the second axis A₂) and hence substantially perpendicular to the common plane of mirror symmetry M, corresponding to the galvanometer stepper motor 14a-2.

The first movable mirror 12b-1 and the second movable mirror 12b-2 form an XY-scanning device configured for scanning the second working beam 50b in the x- and y-directions over a two-dimensional working field 40b. One or more workpieces or start materials located within the working field 40b can hence be laser-processed by the second working beam 50b deflected by the second deflection unit 10b.

The first deflection unit 10a and the second deflection unit 10b are arranged mirror-symmetrically with respect to each other and with respect to a common plane of mirror symmetry M, which in Fig. 1 extends in the yz-plane, i.e perpendicular to the x-direction. As schematically seen in the top view of Fig. 2 and in the frontal view of Fig. 3, the beam path followed by the first working beam 50a before being scanned by the first scanning device 12a, i.e. between the first laser source 28a and the first scanning device 12a, is mirror symmetric, with respect to the common plane of mirror symmetry M, to the beam path followed by the second working beam 50b before being scanned by the second scanning device 12b, i.e. between the second laser source 28b and the second scanning device 12b. In the schematic views shown in Figs. 1 to 3, the first working beam 50a, before being reflected by the first movable mirror 12a-1, is mirror symmetric to the second working beam 50b, before it is reflected by the first movable mirror 12b-1, and aligned therewith in the x-direction.

The portion of the first working beam 50a propagating in the z-direction from the first laser source 28a to the first optical element 16a propagates parallel to the portion of the second working beam 50b that propagates also in the z-direction from the second laser source 28b to the second optical element 16b. The portion of the first working beam 50a that propagates from the first optical element 16a to the first movable mirror 12a-1 and the portion of the second working beam 50b that propagates from the second optical element 16b to the first movable mirror 12b-1 propagate aligned with each other in the x-direction and directed towards each other, i.e. towards the common plane of mirror symmetry M.

The mirror symmetry between the first deflection unit 10a and the second deflection unit 10b with respect to the common plane of mirror symmetry M may be broken along the beam path followed, respectively, by the first working beam 50a and the second working beam 50b, from the corresponding scanning device 12a or 12b on, inasmuch as the movable mirrors 12a-1 and 12a-2 of the first scanning device 12a might be tilted at a given time differently than or without corresponding to a mirror-symmetric tilting state of the movable mirrors 12b-1 and 12b-2 of the second scanning device 12b, i.e. without corresponding to a specular image thereof with respect to the common plane of mirror symmetry M. However, the first movable mirror 12a-1 and the second movable mirror 12b-1 of the first scanning device 12a are, in their o-tilt positions, arranged, respectively, mirror-symmetrically with respect to the first movable mirror 12b-1 and the second movable mirror 12b-2 of the second scanning device 12b in their o-tilt positions.

Such mirror-symmetric arrangement of the first and second deflection units 10a and 10b allows for an arrangement of the first scanning device 12a and the second scanning device 12b, and in particular of the respective second movable mirrors 12a-2 and 12b-2, in which a distance *d*_{OC} between the optical centre of the second movable mirror 12a-2 and the optical centre of the second movable mirror 12b-2 is reduced to a minimum. The second movable mirrors 12a-2 and 12b-2 are positioned very close to each other and are mutually separated in the x-direction by a small distance *d.* Consequently, the first working field 40a of the first deflection unit 10a and the second working field 40b of the second deflection unit 10b overlap with each other in at least a respective subregion thereof forming a common overlap area 42. The common overlap area 42 belongs both to the first working field 40a and to the second working field 40b.

In the embodiments illustrated in Fig. 1 to 3, the movable mirrors 12a-1, 12a-2, 12b-1 and 12b-2 all have a polygonal shape configured to reflect a corresponding working beam having an 1/e² diameter of up to 30 mm. The first and second working beams 50a and 50b have a Gauss-distributed intensity profile in their cross-sections and are incident on the first mirror 12a-1 of the first scanning device 12a and on the first mirror 12b-1 of the second scanning device 12b, respectively, having a first 1/e² beam diameter of 20 mm. The first mirrors 12a-1 and 12b-1 are designed to have an aperture corresponding to 1,5 times the aforesaid 1/e² beam diameter, i.e. an aperture of 30 mm, such that they can respectively reflect about 99,5% of the light of the first and second working beams 50a and 50b, respectively. The optical centres of the second movable mirrors 12a-2 and 12b-2 are separated from each other in the x-direction by the distance *d*_{OC} = 65 mm and the edges of the second movable mirrors 12a-2 and 12b-2 are separated from each other in the x-direction by the distance *d* = 5 mm.

As seen in Fig. 2, each of the second movable mirrors 12a-2 and 12b-2 is separated from the corresponding first movable mirror 12a-1 and 12b-1, respectively, in the y-direction. This separation does however not affect the separation d between the second movable mirrors 12a-2 and 12b-2.

The mirror-symmetric and aligned arrangement of the second movable mirrors 12a-2 and 12b-2 allows minimising the distance *d_{OZ}* between the optical centres of the second movable mirrors 12a-2 and 12b-b, thereby increasing the size of the common overlap area 42 without having to increase a distance between each of the second movable mirrors 12a-2 and 12b-2 and the plane on which the first working field 40a and the second working field 40b (and hence the common overlap area 42) lie, i.e. without having to increase the scan radius..

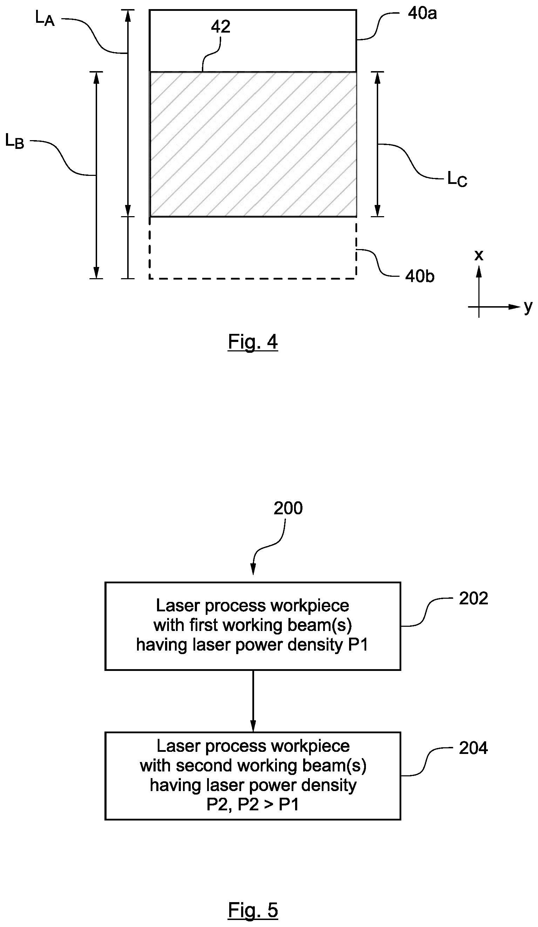

As shown in Fig. 4, which shows a schematic view of the first working field 40a and the second working field 40b in the xy-plane, each of the first and second working fields 40a and 40b has a square shape with a side length L_{A} = L_{B} = 500 mm covering an area of 500 mm x 500 mm. The first working field 40a and the second working field 40b are aligned with each other in the y-direction: in the view illustrated in Fig. 4, the left edges of the first and second working fields 40a and 40b are aligned with each other in the y-direction and so are the corresponding right edges. Thus, in the y-direction the first and second working fields 40a and 40b have a 100% overlap. In the y-direction, the first working field 40a and the second working field 40b overlap over a distance of 500 mm. In the x-direction, the first and second working fields 40a and 40b partly overlap (81% overlap) over a distance L_{C} = 435 mm. The common overlap area 42 hence covers an area of 500 mm x 435 mm.

Such large overlap of the first and second working fields 40a and 40b is compatible, thanks to the mirror-symmetric and aligned arrangement of the first and second deflection units 10a and 10b, and in particular of the second movable mirrors 12a-2 and 12b-2, with a rather small scan radius SR (cf. Fig. 3). In the embodiments considered in Fig. 1 to 3, the scan radius is SR = 620 mm.

The galvanometer motors 14a-2 and 14b-2 for tilting the second movable mirrors 12a-2 and 12b-2 respectively, are arranged on opposite sides of the corresponding second movable mirror 12a-2, 12b-2: as seen in Fig. 1 and 2, the second movable mirror 12a-2 is arranged between the common plane of mirror symmetry M and the stepper motor 14a-2. As seen in Fig. 2 in the xy-plane, the galvanometer motor 14a-2 is arranged to the left of the second movable mirror 12a-2. Likewise, the second movable mirror 12b-2 is arranged between the common plane of mirror symmetry M and the galvanometer motor 14b-2, such that, as seen in Fig. 2 in the xy-plane, the galvanometer motor 14b-2 is arranged to the right of the second movable mirror 12b-2. This configuration, with the galvanometer motors longitudinally extending in the x-direction perpendicular to the common plane of mirror symmetry M is space-saving and favours a reduced distance between the second movable mirrors 12a-2 and 12b-2 while avoiding any obstruction or collision between the stepper motors 14a-2 and 14b-2 and other components of the deflection module and also between the second movable mirrors 12a-2- and 12b-2.

The schematic view of Fig. 2 does not include the galvanometer motors associated to the first movable mirrors 12a-1 and 12b-1 for illustrative purposes. For the same reason, the schematic view of Fig. 3 does not include any of the galvanometer motors of the deflection module and only shows the first and second scanning devices as a schematic superposition of the corresponding movable mirrors 12a-1, 12a-2 and 12b-1, 12b-2, respectively.

As shown in Fig. 3, each of the first and second deflection units 10a and 10b further defines a corresponding detection beam path for a first detection beam 52a and a second detection beam 52b, respectively. The optical elements 16a and 16be, besides being reflective in the aforesaid wavelength range between nm and 1100 nm, have a high transmittance for wavelengths below nm and over 1100 nm. As a consequence, reflection light originated in the working fields, for example by a reflection of illumination light or of the light of the first and/or second working beams 50a, 50b, and reflected back by the scanning devices 12a and 12b are transmitted by the respective optical element 16a and 16b, such that the corresponding detection beams 52a and 52b propagate from the respective working field 40a and 40b to a respective detection device 70a, 70b that is configured for receiving and detecting the detection beams 52a and 52b for monitoring the laser processing by the corresponding deflection unit 10a or 10b. In the embodiment under consideration, the detection devices 70a and 70b each comprise a camera. Further, the first and second deflection units 10a and 10b each comprise a set of movable lenses 72a, 72b and fixed lenses 74a, 74b, respectively, for focusing the respective detection beam 52a and 52b on the corresponding detection device 70a, 70b for each position on the work fields 40a, 40b, from which reflection light might reach the detection devices 70a and 70b depending on the settings of the corresponding scanning devices 12a and 12b.

Fig. 5 is a flow diagram of a method 200 of laser processing one or more workpieces using a deflection module like the deflection module described with respect to Fig. 1 to 3 above. The workpiece can be formed from a basis material such as metal powder by laser-processing successive layers of the basis material within the common overlap area 42 using the first deflection unit 10a and the second deflection unit 10b of the deflection unit.

In the method 200, the first deflection unit 10a of the deflection module is used for scanning the working beam 50a, which is generated as a laser beam with a first power density of 4 MW/cm², and the second deflection unit 10b of the deflection module is used for scanning the working beam 50b, which is generated as a laser beam with a second power density of 40 MW/cm². The first working beam 50a and the second working beam 50b may be generated by identical laser sources having the same beam power. The higher power density of the second working beam is implemented by configuring the second working beam 50b having a smaller spot size than the first working beam 50a.

The first working beam 50a is used for warming up the basis material and the second working beam 50b is subsequently used for laser-processing the basis material at points at which the basis material has previously been warmed up by the first working beam 50a. The first and second working beams 50a and 50b can operate simultaneously, such that the first working beam 50a goes on to warm up other points of the basis material while the second working beam 50b is laser-processing points of the basis material already warmed-up by the first working beam 50a.

For each layer of basis material to be laser-processed, at given points of the basis material, the first working beam 50a is first used, at 202, for warming up the basis material. Then, at 204, the second working beam 50b is used at the same points of the basis material for laser-processing the warmed-up basis material.

In other embodiments (not shown), the first working beam 50a can further be employed for slowing down the cooling-off of points of the basis material that have previously been laser-processed by the second working beam 50b.

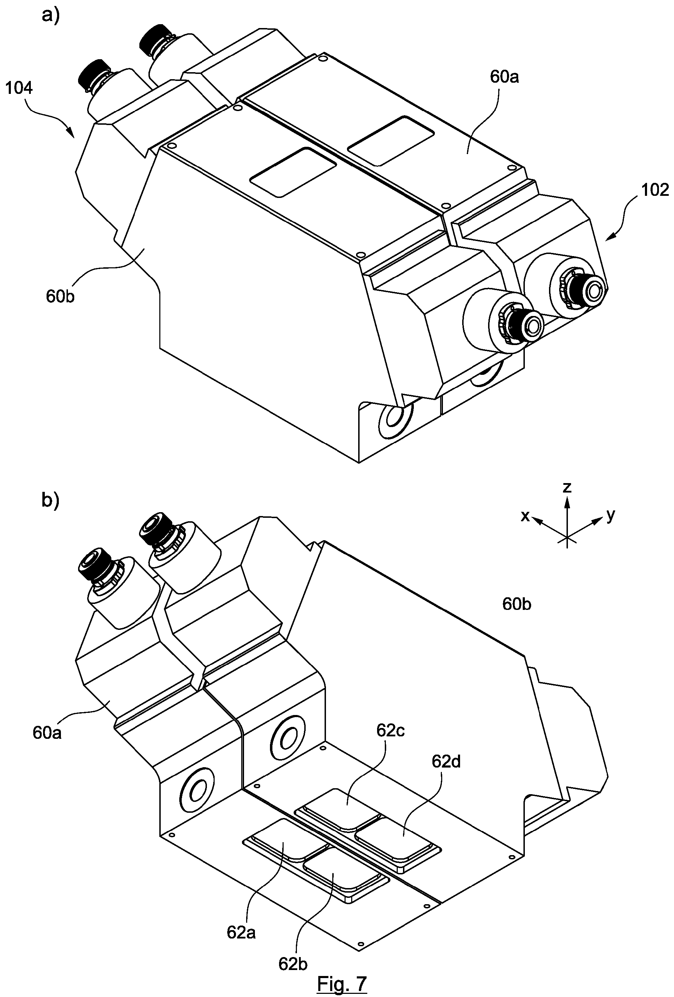

If more than one deflection modules are combined for cooperative operation (see description of Figs. 7 to 9 below), there are more than two working beams available, for which more than one working beams, for example two, can be used in 202 to warm up and/or cool down the basis material and more than one working beam, for example two, can be used in 204 to laser-process points of the basis material already warmed-up or to be cooled-down by the other working beams.

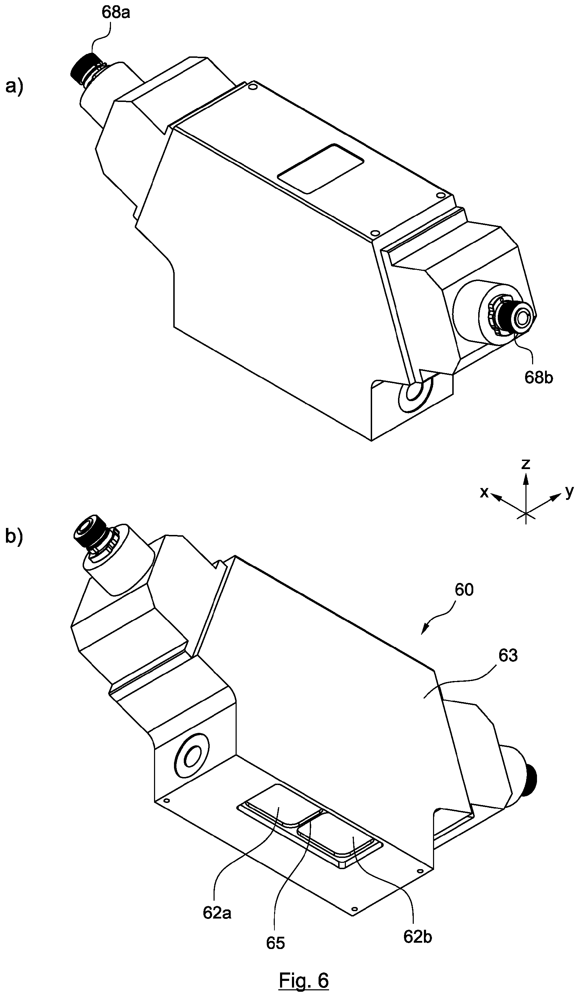

Fig. 6 schematically illustrates two different perspective exterior views of a deflection module according to embodiments of the invention, comprising a first deflection unit 10a and a second deflection unit 10b as described for the embodiments shown in Fig. 1 to 3. As seen in Fig. 6, the deflection module comprises a housing 60. All optical components described with respect to Fig. 1 to 3, with the exception of the laser sources 28a and 28b, are housed within the housing 60, in the arrangement illustrated in Fig. 1 to 3, wherein the longitudinal direction of the housing 60, i.e. the direction in which the housing 60 extends longest, corresponds to the x-direction. In the embodiment shown in Fig. 6, the housing 60 comprises an optical inlet 68a, 68b in the form of an optical connector for receiving a laser source like the laser sources 28a and 28b described for Figs. 1 to 3, wherein, when the laser source is coupled to the optical inlet 68a, 68b, the laser source is arranged in a diagonal position in the xz-plane, forming a 30° angle with respect to each of the z- and x-axes. Thus, in the embodiments considered in Fig. 6, the laser light generated by the laser sources enters the deflection module in such diagonal direction.

The housing 60 is waterproof and dustproof and implements IP64 sealing protection according to the International Protection Rating, such that the interior thereof is isolated from the outside environment of the housing 60 due to the sealing effect provided by the housing 60.

The housing 60 comprises a first transparent window 62a and a second transparent window 62b, which are respectively formed by glass plates arranged at the bottom of the housing 60, as shown in Fig. 6b. The first transparent window 62a is arranged below the second movable mirror 12a-2 of the first scanning device 12a of the first deflection module 10a, aligned with the second movable mirror 12a-2 in the xy-plane (cf. Figs. 1 to 3), at a distance of about 55 mm from the second movable mirror 12a-2 in the z-direction, such that the first working beam 50a can be transmitted through the first transparent window 62a for any targeted point of the first working field 40a, i.e. for any deflection setting of the first scanning device 12a. Likewise, the second transparent window 62b is arranged below the second movable mirror 12b-2 of the second scanning device 12b of the second deflection module 10b, aligned with the second movable mirror 12b-2 in the xy-plane (cf. Figs. 1 to 3), at a distance of about 55 mm from the second movable mirror 12b-2 in the z-direction, such that the second working beam 50b can be transmitted through the second transparent window 62b for any targeted point of the second working field 40b, i.e. for any deflection setting of the second scanning device 12b.

The first transparent window 62a and the second transparent window 62b are arranged adjacent to each other, such that they share a common edge 65. In the embodiment shown in Fig. 6, the first transparent window 62a and the second transparent window 62b are formed by independent glass plates. However, in other embodiments, the first transparent window 62a and the second transparent window 62b may be integral with each other and a single glass plate may cover both the first and second transparent windows 62a and 62b.

As seen in Fig. 6, the first transparent window 62a and the second transparent window 62b are arranged adjacent to a lateral wall 63 of the housing 60 instead of being arranged in the middle of the bottom part of the housing or centred in the y-direction. In other words, the first and second transparent windows are not arranged at equal distances from the lateral wall 63 of the housing and the opposite lateral wall of the housing. As shown in Fig. 7, this allows mutually attaching two deflection modules 102, 104 like the deflection modules illustrated in Fig. 1 to 3 (interior views) and 6 (exterior view) to form a modular deflection system having a minimal distance between the transparent windows 62a and 62b of a first housing 60a of a first deflection module and the corresponding transparent windows 62c and 62d of a second housing 60b of a second deflection module. Fig. 7a and 7b respectively show perspective views from different angles of a first deflection module 102 and a second deflection module 104, which are removably attached to each other forming a modular deflection system.

As seen in Fig. 7b, since the transparent windows 62a and 62b of the first deflection module 102 and the transparent windows 62c and 62d of the second deflection module 104 are arranged offset from a central position with respect to the longitudinal axis of the respective deflection module, without being equidistant with respect to opposing lateral walls of the respective housings 60a and 60b, when the first and second deflection modules 102, 104 are attached together, the transparent windows 62a and 62b of the first housing 60a are adjacent, respectively, to the transparent windows 62c and 62d of the second housing 60b. The housings 60a and 60b comprise an attachment mechanism (not shown) for detachably or removably attaching the first and second deflection modules 102, 104 to each other.

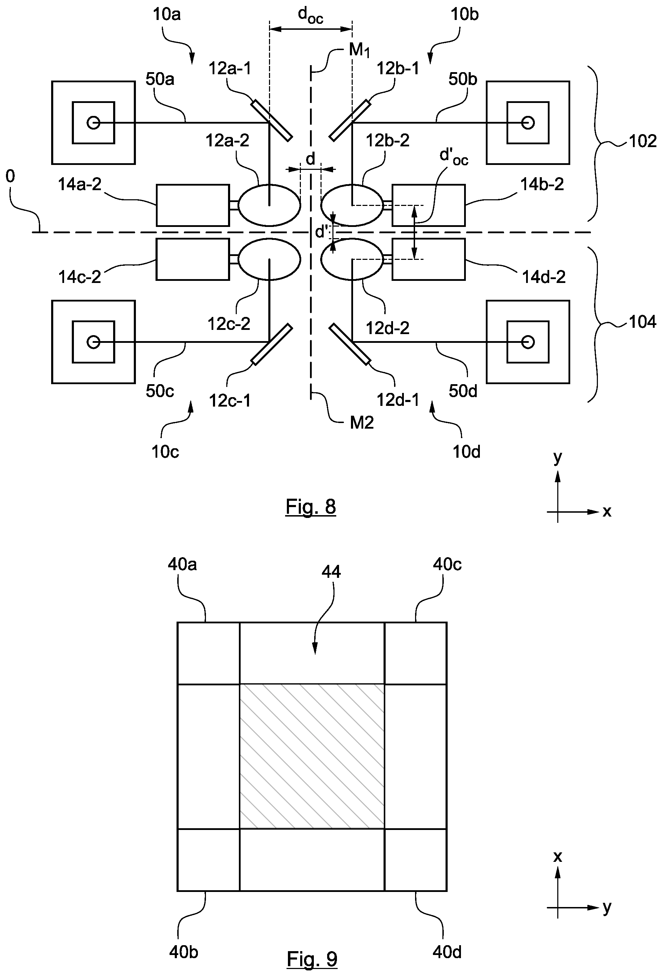

Fig. 8 shows a schematic front view of the interior of the modular deflection system shown in Fig. 7 when the first deflection module 102 and the second deflection module 104 are mutually attached. Each of the first and second deflection modules 102 and 104 corresponds to a deflection module like reflection module described with respect to Figs. 1 to 3, comprising the same components in a corresponding arrangement. Thus, Fig. 8 corresponds to a doubling of the schematic top view of Fig. 2. The first deflection module 102 and the second deflection module 104 are arranged mirror symmetrical with respect to each other and with respect to a further plane of mirror symmetry O that is indicated in Fig. 8.

Due to the symmetric arrangement of each of the first and second deflection modules 102 and 104, wherein the first deflection module 102 defines a first common plane of mirror symmetry M1 corresponding to the plane M in Figs. 1 to 3 and the second deflection module 104 defines a second common plane of mirror symmetry M2 corresponding to the plane M in Figs. 1 to 3, and due to the arrangement of the respective second movable mirrors 12a-2, 12b-2, 12c-2 and 12d-2, which are arranged adjacent to one of the lateral edges of the respective deflection module (corresponding to the arrangement of the transparent windows 62a-62d described with respect to Fig. 7), the separation between each two of the second movable mirrors 12a-2, 12b-2, 12c-2 and 12d-2 is reduced to a minimum. The separation between the second movable mirrors 12a-2 and 12b-2 of the first deflection module 102 and between the second movable mirrors 12c-2 and 12d-2 of the second deflection module 104 as well as the separation distances between the respective optical centres thereof correspond to the separations distances *d, d*_{OC} that have been described for Fig. 1 to 3.

Further, the separation *d'* between the second movable mirror 12a-2 of the first scanning device 12a of the first deflection module 102 and the second movable mirror 12c-2 of the first scanning device 12c of the second deflection module 104 and between the second movable mirror 12b-2 of the second scanning device 12b of the first deflection module 102 and the second movable mirror 12d-2 of the second scanning device 12d of the second deflection module 104 is of about 10 mm. The distance *d'_{OC}* between the optical centre of the second movable mirror 12a-2 of the first scanning device 12a of the first deflection module 102 and the optical centre of the second movable mirror 12c-2 of the first scanning device 12c of the second deflection module 104 and between the optical centre of the second movable mirror 12b-2 of the second scanning device 12b of the first deflection module 102 and the optical centre of the second movable mirror 12d-2 of the second scanning device 12d of the second deflection module 104 is of about 65 mm.

As a consequence, the size of a common overlap field 44, in which the working field 40a of the first deflection unit 10a of the first deflection module 102, the working field 40b of the second deflection unit 10b of the first deflection module 102, the working field 40c of the first deflection unit 10c of the second deflection module 104, and the working field 40d of the second deflection unit 10d of the second deflection module 104 overlap as shown in Fig. 9 can be increased for a given scan radius.

In the embodiment illustrated in Fig. 9, each of the working fields 40a, 40b, 40c and 40d is a square field covering an area of 500 mm x 500 mm. The first and second working fields 40a and 40b of the first deflection module 102 are aligned with each other in a first overlap direction (the x-direction). The first and second working fields 40c and 40d of the second deflection module 104 are likewise aligned with each other in the first overlap direction (the x-direction). The first and second working fields 40a and 40b of the first deflection module 102 and the first and second working fields 40c and 40d of the second deflection module 104 overlap with each other in the first overlap direction to 87%, i.e. for a length of 435 mm. Further, the first working fields 40a and 40c and the second working fields 40b and 40d overlap with each other, respectively, in a second overlap direction (the y-direction) to 87%, i.e. for a length of 435 mm. Thus the common overlap field 44 covers an area of 435 mm x 435 mm, while the scan radius between each of the second movable mirrors 12a-2, 12b-2, 12c-2 and 12d-2 (in their respective o-tilt positions) and the plane of the working fields 40a, 40b, 40c and 40d is of 620 mm.

Although preferred exemplary embodiments are shown and specified in detail in the drawings and the preceding specification, these should be viewed as purely exemplary and not as limiting the invention. It is noted in this regard that only the preferred exemplary embodiments are shown and specified, and all variations and modifications should be protected that presently or in the future lie within the scope of protection of the invention as defined in the claims.

The present disclosure further refers to the following Examples:
1. A deflection module comprising:
   a first deflection unit (10a) comprising a first scanning device (12a) configured for scanning a first working beam (50a) over a first working field (40a), wherein the first scanning device (12a) comprises:
      a first movable mirror (12a-1) for scanning the first working beam (50a) in a first direction (x) by tilting around a first axis (z); and
      a second movable mirror (12a-2) for scanning the first working beam (50a) in a second direction (y) by tilting around a second axis (x);
   a second deflection unit (10b) comprising a second scanning device (12b) configured for scanning a second working beam (50b) over a second working field (40b); wherein the second scanning device (12b) comprises:
      a first movable mirror (12b-1) for scanning the second working beam (50b) in the first direction (x) by tilting around a third axis (z); and
      a second movable mirror (12b-2) for scanning the second working beam (50b) in the second direction (y) by tilting around a fourth axis (z);
   wherein the second movable mirror (12a-2) of the first scanning device (12a) and the second movable mirror (12b-2) of the second scanning device (12b) are arranged mirror-symmetrically with respect to each other and to a common plane of mirror symmetry (M), wherein the second axis is aligned with the fourth axis; and
   wherein the first working field (40a) and the second working field (40b) overlap in a common overlap area (42).
2. The deflection module of Example 1, wherein the first scanning device (12a) further comprises a first galvanometer motor (14a-2) for tilting the second movable mirror (12a-2) of the first scanning device (12a);
   wherein the second scanning device (12b) further comprises a second galvanometer motor (14b-2) for tilting the second movable mirror (12b-2) of the second scanning device (12b); and
   wherein the first galvanometer motor (14a-2) and the second galvanometer motor (14b-2) are arranged on opposite sides of the respective second movable mirror with respect to the common plane of mirror symmetry (M), such that the first galvanometer motor (14a-2) and the second galvanometer motor (14b-2) are arranged mirror-symmetrically with respect to each other and to the common plane of mirror symmetry (M).
3. The deflection module of Example 1 or 2, wherein the first working beam (50a) is incident on the first scanning device (12a) propagating in a first incidence direction (x) perpendicular to the common plane of mirror symmetry (M), and wherein the second working beam (50b) is incident on the second scanning device (12b) propagating in a second incidence direction (x) perpendicular to the common plane of mirror symmetry (M), wherein the first incidence direction is aligned with and opposed to the second incidence direction.
4. The deflection module of any of the preceding Examples, wherein the first deflection unit (10a) and the second deflection unit (10b) are arranged mirror-symmetrically with respect to the common plane of mirror symmetry (M), such that a beam path of the first working beam (50a) before being scanned by the first scanning device (12a) and a beam path of the second working beam (50b) before being scanned by the second scanning device (12b) are mirror symmetric with respect to each other and to the common plane of mirror symmetry (M).
5. The deflection unit of any of the preceding Examples, wherein a beam path of the first working beam (50a) before being scanned by the first scanning device (12a) is aligned with a beam path of the second working beam (50b) before being scanned by the first scanning device (12a) in a direction perpendicular to the common plane of mirror symmetry (M).
6. The deflection module of any of the preceding Examples, wherein a separation (d) between the second movable mirror (12a-2) of the first scanning device (12a) and the second movable mirror (12b-2) of the second scanning device (12b) corresponds to not more than 1/3 of a diameter (D₁, D₂) of the second movable mirror of the first scanning device (12a) and/or of the second movable mirror of the second scanning device (12b), preferably not more than 1/4 thereof, more preferably not more than 1/5 or 1/6 thereof.
7. The deflection module of any of the preceding Examples, wherein a distance (d_{OC}) between an optical centre of the second movable mirror (12a-2) of the first scanning device (12a) and an optical centre of the second movable mirror (12b-2) of the second scanning device (12b) corresponds to not more than 4 times an aperture of the first movable mirror of the first scanning device (12a) and/or of the first movable mirror of the second scanning device (12b), preferably not more than 3 times, more preferably not more than 2,5 or 2 times.
8. The deflection module of Example 7, wherein the first working beam (50a) is incident on the first scanning device (12a) having a first 1/e² beam diameter, and wherein the second working beam (50b) is incident on the second scanning device (12b) having a second 1/e² beam diameter, wherein the second beam diameter is preferably equal to the first beam diameter,
   wherein the aperture of the first movable mirror of the first scanning device (12a) and/or of the first movable mirror of the second scanning device (12b)corresponds to at least 1,1 times, preferably at least 1,3 times, more preferably at least 1,5 times the first 1/e² beam diameter or the second 1/e² beam diameter, respectively.
9. The deflection module of any of any of the preceding Examples, wherein a distance (d_{OC}) between an optical centre of the second movable mirror (12a-2) of the first scanning device (12a) and an optical centre of the second movable mirror (12b-2) of the second scanning device (12b) is not more than 120 mm, preferably not more than 80 mm, more preferably not more than 60 mm.
10. The deflection module of any of the preceding Examples, wherein first working field and the second working field are aligned with each other in a direction parallel to the common plane of mirror symmetry, and wherein the common overlap area (42) has an extension in an overlap direction perpendicular to the common plane of mirror symmetry corresponding to at least 75%, preferably at least 80%, more preferably at least 90% the extension covered by the first and/or second working field in the overlap direction.
11. The deflection module of any of the preceding Examples, wherein the second movable mirror (12a-2) of the first scanning device (12a) is arranged along a beam path of the first working beam (50a) towards the first working field (40a) after the first movable mirror (12a-1) of the first scanning device (12a),
   wherein the second movable mirror (12b-2) of the second scanning device (12b) is arranged along a beam path of the second working beam (50b) towards the second working field (40b) after the first movable mirror (12b-1) of the second scanning device (12b), and
   wherein a height (SR) of the second movable mirror (12a-2) of the first scanning device (12a) over the first working field (40a) and/or a height (SR) of the second movable mirror (12b-2) of the second scanning device (12b) over the second working field (40b) is not more than 800 mm, preferably not more than 600 mm, more preferably not more than 400 mm.
12. The deflection module of any of the preceding Examples, further comprising a housing (60), wherein the first deflection unit (10a) and the second deflection unit (10b) are enclosed within the housing (60), wherein the housing preferably is dustproof and/or waterproof.
13. The deflection module of Example 11, wherein the housing (60) comprises a first transparent window (62a) configured for letting through the first working beam (50a) propagating from the first scanning device (12a) to the first working field (40a) and a second transparent window (62b) configured for letting through the second working beam (50b) propagating from the second scanning device (12b) to the second working field (40b), wherein the first transparent window (62a) and/or the second transparent window (62b) preferably comprises a glass plate.
14. The deflection module of Example 13, wherein the first transparent window (62a) and the second transparent window (62b) are adjacent to each other, and/or wherein the first transparent window (62a) and the second transparent window (62b) are adjacent to the same lateral wall (63) of the housing (60), and/or wherein the first transparent window (62a) and the second transparent window (62b) are integral with each other.
15. The deflection module of any of the preceding Examples, wherein the first deflection unit (10a) and/or the second deflection unit (10b) further comprises an optical element (16a; 16b), preferably a dichroic and/or reflective mirror, for reflecting working light in a first wavelength range of the first or second working beam (50b), respectively, at least partially, wherein the respective scanning device (12a, 12b) is arranged in the beam path of the corresponding working beam (50a, 50b) between the corresponding working field (40a, 40b) and the corresponding optical element (16a, 16b), such that the corresponding working beam (50a, 50b) propagates to the corresponding scanning device (40a, 40b) being reflected at the corresponding optical element (16a, 16b).
16. The deflection module of Example 15, wherein the optical element (16a, 16b) further transmits detection light in a second wavelength range at least partially, wherein the respective deflection unit (10a, 10b) preferably defines a detection beam path followed by a detection beam (52a, 52b) in the second wavelength range from the corresponding working field (40a, 40b) to a corresponding detection device (70a, 70b), wherein the detection beam (52a, 52b) preferably propagates from said corresponding working field (40a, 40b) to said corresponding detection window being reflected by the corresponding scanning device (12a, 12b) and transmitted by the corresponding optical element (16a, 16b).
17. The deflection module of any of the preceding Examples, wherein the first deflection unit (10a) and/or the second deflection unit (10b) further comprises a focusing device (20a, 20b) for focusing, zooming and/or collimating the respective working beam (50a, 50b), wherein the focusing device (20a, 20b) has a variable focal length,
   wherein the focusing device (20a, 20b) preferably comprises a first fixed lens (26a, 26b), a first movable lens (24a, 24b) and a further fixed or movable lens (22a, 22b).
18. A modular deflection system (100) comprising a first deflection module (102) according to any of the preceding Examples and a second deflection module (104) according to any of the preceding Examples,
   wherein the first deflection module (102) and the second deflection module (104) are mutually attachable;
   wherein, when the first deflection module (102) and the second deflection module (104) are attached to each other, the common overlap area (42) of the first deflection module (102) and the common overlap area (42) of the second deflection module (104) overlap, thereby forming a common overlap field (44).
19. The modular deflection system of Example 18, wherein the first deflection module (102) and the second deflection module (104) are mirror symmetrical with respect to each other, when the first deflection module (102) and the second deflection module (104) are mutually attached.
20. The modular deflection system of Example 18 or 19, wherein a distance (d') between an optical centre of the second movable mirror (12a-2) of the first scanning device (12a) of the first deflection module (102) and an optical centre of the second movable mirror (12c-2, 12d-2) of the first or second scanning device (12c, 12d) of the second deflection module (104) corresponds to not more than 4 times an aperture of the first movable mirror (12a-1) of the first scanning device (12a) of the first deflection module (102), preferably not more than 3 times, more preferably not more than 2,5 or 2 times.
21. The modular deflection system of any of Examples 18 to 20, wherein a distance (d'_{OC}) between an optical centre of the second movable mirror (12a-2) of the first scanning device (12a) of the first deflection module (102) and an optical centre of the second movable mirror (12c-2, 12d-2) of the first or second scanning device (12c, 12d) of the second deflection module (104) is not more than 120 mm, preferably not more than 80 mm, more preferably not more than 60 mm.
22. The modular deflection system of any of Examples 19 to 21, wherein the first deflection module (102) comprises a first housing (60a), wherein the first deflection unit (10a) and the second deflection unit (10b) of the first deflection module (102) are enclosed within the first housing (60a), wherein the first housing (60a) preferably is dustproof and/or waterproof; and
   wherein the second deflection module (104) comprises a second housing (60b), wherein the first deflection unit (10a) and the second deflection unit (10b) of the second deflection module (104) are enclosed within the second housing (60b), wherein the second housing (60b) preferably is dustproof and/or waterproof;
   wherein the first housing (60a) and the second housing (60b) are mutually attachable in such a manner that the first housing (60a) and the second housing (60b) are arranged adjacent to each other, when the first deflection module (102) and the second deflection module (104) are attached to each other.
23. The modular deflection system of Example 22, wherein the first housing (60a) comprises a first transparent window (62a) through which the respective first working beam (50a) propagates from the first scanning device (12a) of the first deflection module (102) to the respective first working field (40a) and a second transparent window (62b) through which the respective second working beam (50b) propagates from the second scanning device (12b) of the first deflection module (102) to the respective second working field (40b),
   wherein the second housing (60b) comprises a third transparent window (62c) through which the respective first working beam (50c) propagates from the first scanning device (12c) of the second deflection module (104) to the respective first working field (40c) and a fourth transparent window (62d) through which the respective second working beam (50d) propagates from the second scanning device (12d) of the second deflection module (104) to the respective second working field (40d),
   wherein the first transparent window (62a), the second transparent window (62b), the third transparent window (62c) and/or the fourth transparent window (62d) are adjacent to each other when the first deflection module and the second deflection module are attached to each other.
24. The modular deflection system of any of Examples 18 to 23 wherein the first and second working fields (40a, 40b) of the first deflection module (102) are aligned with each other in a first overlap direction, and the first and second working fields (40c, 40d) of the second deflection module (104) are aligned with each other in said first overlap direction, wherein the first overlap direction preferably is parallel to the common plane of mirror symmetry of the first and second deflection modules (102, 104), wherein the first working field (40a) of the first deflection module (102) is aligned with one of the first and second working fields (40c, 40d) of the second deflection module (104) in a second overlap direction perpendicular to the first overlap direction and the second working field (40b) of the first deflection module (102) is aligned with the other one of the first and second working fields (40d, 40c) of the second deflection module (104) in the second overlap direction, wherein in each of the first and second overlap directions, the common overlap field (44) has an extension corresponding to at least 75%, preferably at least 80%, more preferably at least 90% the extension covered by the first and/or second working fields (40a, 40b, 40c, 40d) of the first and/or second deflection modules (102, 104) in the corresponding overlap direction.
25. A method of laser processing a workpiece using a deflection module according to any of Examples 1 to 17 or a modular deflection system according to any of Examples 18 to 24, wherein the method comprises:
   - laser processing (202) the workpiece by a first working beam (50a) deflected by a first deflection unit (10a), wherein the first working beam (50a) has a first power density (P1); and
   - laser processing (204) the workpiece by a second working beam (50b) deflected by a second deflection unit (10b), wherein the second working beam (50b) has a second power density (P2), higher than the first power density (P1), preferably at least 1,5 times higher than the first power density (P1).
26. The method of Example 25, wherein, at least in a subregion of the common overlap area (42), the workpiece is laser processed by the first working beam (50a) before being laser processed by the second working beam (50b).
27. The method of Example 25 or 26, wherein, at least in a subregion of the common overlap area (42), the workpiece is laser processed by the first working beam (50a) after being laser processed by the second working beam (50b).
28. The method of any of Examples 25 to 27, wherein the first working beam and the second working beam have the same beam power and wherein the first working beam has a greater spot size than the second working beam.
29. The method of any of Examples 25 to 28, wherein the first working beam and the second working beam have the same spot size and wherein the first working beam has a smaller beam power than the second working beam.

## Claims

1. A deflection module comprising:
a first deflection unit (10a) comprising a first scanning device (12a) configured for scanning a first working beam (50a) over a first working field (40a), wherein the first scanning device (12a) comprises:
a first movable mirror (12a-1) for scanning the first working beam (50a) in a first direction (x) by tilting around a first axis (z); and
a second movable mirror (12a-2) for scanning the first working beam (50a) in a second direction (y) by tilting around a second axis (x);
a second deflection unit (10b) comprising a second scanning device (12b) configured for scanning a second working beam (50b) over a second working field (40b); wherein the second scanning device (12b) comprises:
a first movable mirror (12b-1) for scanning the second working beam (50b) in the first direction (x) by tilting around a third axis (z); and
a second movable mirror (12b-2) for scanning the second working beam (50b) in the second direction (y) by tilting around a fourth axis (z);
wherein the second movable mirror (12a-2) of the first scanning device (12a) and the second movable mirror (12b-2) of the second scanning device (12b) are arranged mirror-symmetrically with respect to each other and to a common plane of mirror symmetry (M); and
wherein the first working field (40a) and the second working field (40b) overlap in a common overlap area (42);
wherein a distance (d_{OC}) between an optical centre of the second movable mirror (12a-2) of the first scanning device (12a) and an optical centre of the second movable mirror (12b-2) of the second scanning device (12b) is not more than 120 mm.

2. The deflection module of any of the preceding claims, wherein a separation (d) between the second movable mirror (12a-2) of the first scanning device (12a) and the second movable mirror (12b-2) of the second scanning device (12b) corresponds to not more than 1/3 of a diameter (D₁, D₂) of the second movable mirror of the first scanning device (12a) and/or of the second movable mirror of the second scanning device (12b), preferably not more than 1/4 thereof, more preferably not more than 1/5 or 1/6 thereof.

3. The deflection module of any of the preceding claims, wherein a distance (d_{OC}) between an optical centre of the second movable mirror (12a-2) of the first scanning device (12a) and an optical centre of the second movable mirror (12b-2) of the second scanning device (12b) corresponds to not more than 4 times an aperture of the first movable mirror of the first scanning device (12a) and/or of the first movable mirror of the second scanning device (12b), preferably not more than 3 times, more preferably not more than 2,5 or 2 times;
wherein the first working beam (50a) preferably is incident on the first scanning device (12a) having a first 1/e² beam diameter, and wherein the second working beam (50b) preferably is incident on the second scanning device (12b) having a second 1/e² beam diameter, wherein the second beam diameter is more preferably equal to the first beam diameter,
Wherein, more preferably, the aperture of the first movable mirror of the first scanning device (12a) and/or of the first movable mirror of the second scanning device (12b) corresponds to at least 1,1 times, even more preferably at least 1,3 times, most preferably at least 1,5 times the first 1/e² beam diameter or the second 1/e² beam diameter, respectively.

4. The deflection module of any of any of the preceding claims, wherein said distance (d_{OC}) between the optical centre of the second movable mirror (12a-2) of the first scanning device (12a) and the optical centre of the second movable mirror (12b-2) of the second scanning device (12b) is not more than 80 mm, preferably not more than 60 mm.

5. The deflection module of any of any of the preceding claims, wherein a distance (d) between the second movable mirror (12a-2) of the first scanning device (12a) and the second movable mirror (12b-2) of the second scanning device (12b) is not more than 50 mm, preferably not more than 30 mm, more preferably not more than 10 mm.

6. The deflection module of any of the preceding claims, wherein first working field and the second working field are aligned with each other in a direction parallel to the common plane of mirror symmetry, and wherein the common overlap area (42) has an extension in an overlap direction perpendicular to the common plane of mirror symmetry corresponding to at least 75%, preferably at least 80%, more preferably at least 90% the extension covered by the first and/or second working field in the overlap direction.

7. The deflection module of any of the preceding claims, wherein the second movable mirror (12a-2) of the first scanning device (12a) is arranged along a beam path of the first working beam (50a) towards the first working field (40a) after the first movable mirror (12a-1) of the first scanning device (12a),
wherein the second movable mirror (12b-2) of the second scanning device (12b) is arranged along a beam path of the second working beam (50b) towards the second working field (40b) after the first movable mirror (12b-1) of the second scanning device (12b), and
wherein a height (SR) of the second movable mirror (12a-2) of the first scanning device (12a) over the first working field (40a) and/or a height (SR) of the second movable mirror (12b-2) of the second scanning device (12b) over the second working field (40b) is not more than 800 mm, preferably not more than 600 mm, more preferably not more than 400 mm.

8. The deflection module of any of the preceding claims, wherein the first deflection unit (10a) and/or the second deflection unit (10b) further comprises an optical element (16a; 16b), preferably a dichroic and/or reflective mirror, for reflecting working light in a first wavelength range of the first or second working beam (50b), respectively, at least partially, wherein the respective scanning device (12a, 12b) is arranged in the beam path of the corresponding working beam (50a, 50b) between the corresponding working field (40a, 40b) and the corresponding optical element (16a, 16b), such that the corresponding working beam (50a, 50b) propagates to the corresponding scanning device (40a, 40b) being reflected at the corresponding optical element (16a, 16b), wherein the first wavelength range preferably is nm to 1100 nm.

9. The deflection module of any of the preceding claims, wherein the optical element (16a, 16b) further transmits detection light in a second wavelength range at least partially, wherein the respective deflection unit (10a, 10b) preferably defines a detection beam path followed by a detection beam (52a, 52b) in the second wavelength range from the corresponding working field (40a, 40b) to a corresponding detection device (70a, 70b), wherein the detection beam (52a, 52b) preferably propagates from said corresponding working field (40a, 40b) to said corresponding detection window being reflected by the corresponding scanning device (12a, 12b) and transmitted by the corresponding optical element (16a, 16b).

10. The deflection module of any of the preceding claims, wherein the first deflection unit (10a) and/or the second deflection unit (10b) further comprises a focusing device (20a, 20b) for focusing, zooming and/or collimating the respective working beam (50a, 50b), wherein the focusing device (20a, 20b) has a variable focal length,
wherein the focusing device (20a, 20b) preferably comprises a first fixed lens (26a, 26b), a first movable lens (24a, 24b) and a further fixed or movable lens (22a, 22b).

11. The deflection module of any of the preceding claims, wherein each of the first and second working fields (40a, 40b) covers an area of 100 mm x 100 mm to mm x 1000 mm, preferably from 300 mm x 300 mm to 700 mm x 700 mm, more preferably from 400 mm x 400 mm to 600 mm x 600 mm.

12. A modular deflection system (100) comprising a first deflection module (102) according to any of the preceding claims and a second deflection module (104) according to any of the preceding claims,
wherein the first deflection module (102) and the second deflection module (104) are mutually attachable;
wherein, when the first deflection module (102) and the second deflection module (104) are attached to each other, the common overlap area (42) of the first deflection module (102) and the common overlap area (42) of the second deflection module (104) overlap, thereby forming a common overlap field (44).

13. The modular deflection system of claim 12, wherein the first deflection module (102) and the second deflection module (104) are mirror symmetrical with respect to each other, when the first deflection module (102) and the second deflection module (104) are mutually attached.

14. A method of laser processing a workpiece using a deflection module according to any of claims 1 to 11 or a modular deflection system according to any of claims 12 to 13, wherein the method comprises:
- laser processing (202) the workpiece by a first working beam (50a) deflected by a first deflection unit (10a), wherein the first working beam (50a) has a first power density (P1); and
- laser processing (204) the workpiece by a second working beam (50b) deflected by a second deflection unit (10b), wherein the second working beam (50b) has a second power density (P2), higher than the first power density (P1), preferably at least 1,5 times higher than the first power density (P1).

15. The method of claim 14, wherein, at least in a subregion of the common overlap area (42), the workpiece is laser processed by the first working beam (50a) before being laser processed by the second working beam (50b); and/or
wherein, at least in a subregion of the common overlap area (42), the workpiece is laser processed by the first working beam (50a) after being laser processed by the second working beam (50b); and/or
wherein the first working beam and the second working beam have the same beam power and wherein the first working beam has a greater spot size than the second working beam; and/or
wherein the first working beam and the second working beam have the same spot size and wherein the first working beam has a smaller beam power than the second working beam.
